(19) Europäisches Patentamt / European Patent Office / Office européen des brevets

(11) **EP 2 976 635 B1**

(12) **FASCICULE DE BREVET EUROPEEN**

(45) Date de publication et mention de la délivrance du brevet:
**12.01.2022 Bulletin 2022/02**

(21) Numéro de dépôt: **14716895.9**

(22) Date de dépôt: **19.03.2014**

(51) Int Cl.:
*G01N 29/22* (2006.01)    *G01N 29/24* (2006.01)
*G01N 29/26* (2006.01)    *G01N 29/265* (2006.01)

(86) Numéro de dépôt international:
**PCT/FR2014/050643**

(87) Numéro de publication internationale:
**WO 2014/147344 (25.09.2014 Gazette 2014/39)**

(54) **DISPOSITIF DE CONTRÔLE NON DESTRUCTIF DE PRODUITS TUBULAIRES AVEC DES RÉSEAUX EN PHASE ÉLECTROACOUSTIQUES, NOTAMMENT SUR SITE**

VORRICHTUNG ZUR ZERSTÖRUNGSFREIEN KONTROLLE VON ROHREN MIT ELEKTROAKUSTISCHEN GRUPPENWANDLERN, INSBESONDERE VOR ORT

APPARATUS FOR THE NONDESTRUCTIF CONTROL OF TUBULAR PRODUCTS WITH ELECTROACOUSTIC PHASED ARRAYS, IN PARTICULAR ON-SITE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **21.03.2013 FR 1352548**

(43) Date de publication de la demande:
**27.01.2016 Bulletin 2016/04**

(73) Titulaire: **Vallourec Tubes France**
**92190 Meudon (FR)**

(72) Inventeur: DENEUVILLE, François
F-59550 Beaurepaire sur Sambre (FR)

(74) Mandataire: Marsolais, Richard
Vallourec Tubes
DPI
12 Rue de la Verrerie
92190 Meudon (FR)

(56) Documents cités:
**EP-A1- 1 830 185        EP-A2- 2 138 837**
**US-A1- 2008 314 154**

- **Guillaume Neau ET AL: "The promise of ultrasonic phased arrays and the role of modeling in specifying systems", ASNT Fall Conference & Quality Testing Show, 27 October 2006 (2006-10-27), XP055583063, Houston, US Retrieved from the Internet: URL:http://www.bercli.net/docs/ANSTpaperBERCLI_homeformat.pdf [retrieved on 2019-04-24]**
- **Anonymous: "Phased array ultrasonics - Wikipedia", , 1 January 2019 (2019-01-01), XP055583053, Retrieved from the Internet: URL:https://en.wikipedia.org/wiki/Phased_array_ultrasonics [retrieved on 2019-04-24]**

EP 2 976 635 B1

**Description**

L'invention a trait à un dispositif et un procédé pour contrôler des pièces tubulaires en acier de manière non destructive.

Il est courant de contrôler de telles pièces dès après leur fabrication, en particulier sur la ligne de production elle-même, pour y détecter la présence d'imperfections. Le contrôle se fait généralement à l'aide de machines d'inspection automatiques. De telles machines permettent notamment un contrôle dit "au défilé", dans lequel chaque pièce produite est déplacée selon sa direction longitudinale par rapport à une machine de contrôle. Les machines en question peuvent être de différents types, en particulier ultrasonores, à courants de Foucault, ou à flux de fuite magnétique.

La plupart des machines de contrôle utilisées en production comprennent une ou plusieurs sondes de contrôle en mouvement hélicoïdal par rapport à la pièce. On balaye ainsi la pièce sur sa circonférence et sa longueur. Le plus souvent, les sondes sont disposées extérieurement à la pièce, en particulier pour des raisons de gain de temps, d'ergonomie et de réduction de coût de la machine de contrôle. Avec de tels balayages, on peut obtenir une véritable cartographie des imperfections de la pièce inspectée : on dispose de données de localisation de chaque imperfection par rapport à la pièce.

À l'usage, des imperfections peuvent apparaître dans la pièce tubulaire, et/ou s'y développer. Il s'agit en particulier de fissures de fatigue ou de corrosion, de zones corrodées, où l'épaisseur de la pièce se trouve réduite du fait de la formation d'oxydes sur sa surface intérieure, ou encore de zones d'épaisseur réduite du fait d'une érosion. Il est nécessaire de détecter de telles imperfections pour réaliser un diagnostic de la pièce.

Fréquemment, les pièces tubulaires sont assemblées les unes aux autres pour former, sur site, des structures de taille relativement importante et/ou de géométrie complexe. Il peut s'agir par exemple de colonnes de forages, de pipeline, de centrales de production d'énergie, de structures de constructions métalliques, d'engins de chantier et autres véhicules industriels lourds, ou encore de bouteilles de gaz.

Il demeure indispensable d'inspecter les pièces tubulaires de telles structures pour y détecter des imperfections apparues à l'usage, et/ou surveiller l'évolution d'imperfections. Il peut en outre être intéressant de contrôler les pièces tubulaires dès après leur assemblage mutuel, ou du moins avant usage, pour y détecter d'éventuelles imperfections créées lors de l'assemblage, et/ou une évolution négative, du fait de cet assemblage, d'imperfections préexistantes. Il convient d'utiliser une méthode non destructive, et qui puisse être mise en œuvre sans démonter les structures en question.

Les imperfections, défauts ou détériorations, sur la surface extérieure des pièces peuvent être détectés par des méthodes simples telles qu'une inspection visuelle par exemple.

Les imperfections localisées sur la surface intérieure du produit ou dans son épaisseur sont beaucoup plus difficiles à repérer.

Contrairement à ce qui peut se faire en production, une fois les pièces installées sur site, il est pratiquement impossible, dans la plupart des cas, de les faire se déplacer par rapport à des sondes de contrôle selon un mouvement hélicoïdal : les pièces tubulaires sont généralement fixées les unes aux autres, et l'encombrement de la structure résultante, ou sa géométrie, interdisent tout mouvement de révolution de la sonde autour des pièces. C'est le cas en particulier à chaque fois que les pièces tubulaires sont assemblées dans des structures en forme de panneaux, où les pièces sont disposées les unes à côté des autres, de manière mutuellement très rapprochée. Il s'agit notamment des échangeurs thermiques, des tubes à membrane utilisés dans les générateurs de vapeur, ou de parties coudées ou cintrées d'une conduite.

Des dispositifs de contrôle à sondes internes, en particulier rotatives, peuvent être translatés à l'intérieur des pièces tubulaires. Ces dispositifs se révèlent assez peu pratiques à l'usage : il faut démonter une partie de la structure tubulaire pour les y insérer et/ou y prévoir des bouches d'accès. En outre, ces dispositifs ont tendance à se bloquer à l'intérieur des structures. Il faut alors localiser les dispositifs et démonter la structure jusqu'à les atteindre. À cela s'ajoutent une durée d'inspection allongée due à la nécessité de réaliser des aller-retour dans la structure et des difficultés à guider et coupler tout dispositif se trouvant à l'intérieur de la pièce.

Des techniques d'inspection par l'extérieur de pièces tubulaires sur site, qui permettent, entre autres choses, de cartographier la structure, se révèlent nécessaires. Les techniques à base d'ondes ultrasonores sont à privilégier, car ces dernières se propagent facilement dans les pièces, y compris lorsque celles-ci présentent une épaisseur importante, jusqu'à plusieurs centaines de millimètres.

Dans les structures présentant de fortes contraintes d'encombrement ou une géométrie complexe, on peut déplacer manuellement des sondes ultrasonores portatives autour des pièces tubulaires et le long de celles-ci afin de couvrir l'ensemble de la circonférence de chaque pièce de la structure. Il en résulte cependant un temps d'inspection très long. Il faut prévoir un médium de couplage entre chaque sonde ultrasonore et les pièces contrôlées, tel que de l'eau ou du gel par exemple.

On utilise le plus souvent un guide d'onde en plexiglas, ou autre matériau rigide. Cette solution est inadaptée aux surfaces détériorées, telles que celles que l'on peut trouver sur des pièces ayant déjà fonctionné.

Outre leur lenteur, les techniques qui prévoient un déplacement circonférentiel, en particulier manuel, par rapport aux pièces à inspecter souffrent d'une difficulté pratique à couvrir effectivement toute la zone à inspecter et à permettre une traçabilité correcte. Il est difficile d'effectuer manuellement des mouvements réguliers, présentant un pas de balayage constant, à la fois dans la direction longitudinale des pièces et selon la circonférence de celles-ci. Il en résulte une impossibilité pratique à réaliser une cartographie à partir des résultats de l'inspection. En pratique, l'inspecteur se contente de signaler grossièrement, au moyen d'une marque par exemple, les zones douteuses. Cela complique toute traçabilité dans le temps

On connaît par US 7,975,549 B2 un appareil pour contrôler de manière non destructive des pièces présentant une surface extérieure au moins partiellement courbe, en particulier un raidisseur à usage en construction aéronautique. L'appareil comprend un boîtier de forme correspondant au raidisseur, un guide mécanique pour stabiliser l'appareil par rapport à la pièce, un traducteur ultrasonore, par exemple piézoélectrique, comprenant une pluralité de transducteurs élémentaires régulièrement répartis suivant un arc de cercle et un guide d'ondes, intercalé entre le traducteur et la pièce. Le guide d'ondes comprend une première face de forme correspondant à l'arc de cercle et une seconde face, opposée à la première, dont la courbure correspond à celle de la pièce. Chaque transducteur élémentaire émet des ondes ultrasonores qui se propagent selon une direction normale à la surface courbe de la pièce. Les transducteurs élémentaires sont activés les uns après les autres, éventuellement par groupes successifs, de manière à balayer un secteur angulaire correspondant à la surface courbe de la pièce.

Le raidisseur en question est une pièce essentiellement pleine et diffère de ce fait grandement d'une pièce tubulaire. L'appareil en question permet seulement de détecter des défauts qui sont à la fois situés dans la partie courbe du raidisseur et orientés tangentiellement à cette courbure. L'appareil permet de détecter des défauts dans l'épaisseur du raidisseur, en particulier des défauts de laminage du type que l'on appelle "dédoublures" dans la technique. Toutefois, il n'est pas adapté à l'inspection de pièces tubulaires sur site, pour lesquelles on recherche tout particulièrement des imperfections sur la paroi interne et/ou orientés essentiellement radialement, telles que les fissures de fatigue notamment.

On connaît par US 7,984,650 B2 un dispositif dont la structure mécanique ressemble en principe au dispositif de US 7,975,549 B2. Un scanneur portable, à usage pour un contrôle non destructif sur site de tubes assemblés les uns aux autres par des plats pour former des panneaux de chaudières, comprend une sonde ultrasonore, un guide d'ondes attaché à la sonde et un encodeur qui fournit un signal indiquant une position de la sonde par rapport au tube contrôlé. La forme du guide d'ondes doit être adaptée à chaque fois à la forme des tubes du panneau. Ce document reste muet sur la façon de commander la sonde pour inspecter les tubes en question.

On connaît encore par US 5,526,691 un procédé d'inspection sur site de tubes de panneaux de chaudières, en particulier quant à l'existence de fissures de corrosion. Le procédé utilise deux bobines du type connu sous le nom de EMAT : l'une d'elle émet un faisceau d'ondes ultrasonores de cisaillement avec un angle de divergence déterminé à chaque fois en fonction du diamètre des tubes et de leur épaisseur, tandis que l'autre bobine reçoit des ondes ultrasonores résultantes, en particulier celles renvoyées par d'éventuelles imperfections. Les procédés utilisant des bobines EMAT sont pratiquement inutilisés du fait de nombreux inconvénients de cette technologie, tels qu'une magnétisation de la pièce inspectée, une forte aimantation qui nuit au déplacement des bobines par rapport au tube, et une difficulté de diagnostic. Surtout cette technologie ne permet pas de localiser les imperfections, et en particulier de distinguer celles situées à la surface interne des pièces de celles situées à la surface extérieure. Il en résulte que cette technologie est impropre à la réalisation de cartographies d'une installation réalisée à partir de pièces tubulaires.

On connaît par US 5,549,004 un dispositif pour inspecter sur site des tubes de panneaux de chaudières. Le dispositif en question vise à détecter des réductions d'épaisseur dans la paroi des tubes. Le dispositif en question présente une structure mécanique proche en principe de celle de US 7,975,549 B2. Le document US 5,549,004 prévoit d'émettre des faisceaux d'ondes ultrasonores sensiblement perpendiculairement à la surface du tube à contrôler, c'est-à-dire généralement sans déflexion. Ceci permet, en théorie du moins, de contrôler une portion angulaire comprise entre 60 et 70 degrés. Selon l'expérience de la demanderesse, l'étendue inspectée et la nature des imperfections détectées sont largement insuffisantes.

On connaît par US 7,516,664 un procédé d'inspection d'une pièce composite pleine, dans lequel on émet des faisceaux d'ondes ultrasonores défléchis à l'aide d'un capteur multiéléments. On transmet à la pièce des faisceaux d'ondes ultrasonores longitudinales présentant une inclinaison par rapport à une direction normale à l'interface de la pièce comprise entre -10° et +10°. On réalise ainsi une sorte de balayage dans une gamme d'inclinaison réduite pour sélectionner une valeur d'inclinaison permettant une détection optimale de porosités ou de déboublures dans une pièce composite. Le procédé en question s'intéresse surtout à l'inspection de pièces de géométrie imparfaite, en particulier non symétriques présentant une différence de courbure entre l'intrados et l'extrados. Il ne permet pas la détection de fissures en surface intérieure et extérieure, en particulier radiales, du moins pas de manière satisfaisante.

La Demanderesse a cherché à améliorer l'existant. Elle s'est fixé pour objectif un procédé et un dispositif permettant de contrôler complètement sur site une installation à base de pièces tubulaires, à la recherche notamment d'imperfections situées en surface interne des pièces, en surface externe ou à proximité de ces surfaces. Le procédé et le dispositif visés devraient permettre de distinguer les différentes imperfections, de les localiser dans la section transversale des pièces et dans la longueur de celles-ci. En outre, le dispositif et le procédé recherchés devraient permettre la réalisation d'une cartographie de l'installation, permettant entre autres choses de surveiller l'apparition d'imperfections, et/ou l'évolution de celles-ci.

On propose un dispositif de contrôle de pièces tubulaires, du type comprenant au moins un chariot équipé d'une pluralité de transducteurs élémentaires de type électroacoustique, répartis selon au moins une première direction, et un guide apte à coopérer avec une surface extérieure d'une pièce tubulaire à contrôler pour positionner le chariot de manière que ladite première direction corresponde sensiblement à une direction transversale de la pièce tubulaire. Une électronique de commande est reliée aux transducteurs électroacoustiques. L'électronique de commande comprend de la mémoire stockant une ou plusieurs lois temporelles d'excitation et un ou plusieurs contrôleurs agencés pour appliquer successivement au moins une loi temporelle d'excitation respective à des sous-ensembles de transducteurs élémentaires mutuellement adjacents selon la première direction. Certaines au moins des lois temporelles d'excitation sont agencées de manière que les transducteurs élémentaires des sous-ensembles respectifs produisent conjointement des faisceaux d'ondes ultrasonores incidents se propageant selon une direction respective inclinée par rapport à une direction normale à la surface extérieure de la pièce tubulaire. Certaines au moins des lois temporelles d'excitation sont agencées de manière que les transducteurs élémentaires des sous-ensembles respectifs produisent des faisceaux d'ondes ultrasonores incidents se propageant suivant des directions respectives présentant une même inclinaison par rapport à la direction normale à la surface extérieure de la pièce tubulaire.

Le dispositif proposé permet de balayer une partie au moins d'une section transversale d'une pièce tubulaire et d'y détecter à la fois des imperfections proches de sa surface intérieure, ou débouchant sur celle-ci, et des défauts proches de sa surface extérieure, ou débouchant sur celle-ci. En particulier, le dispositif proposé permet la détection d'imperfections s'étendant radialement, telles que des fissures notamment. Il est moins coûteux à fabriquer qu'une machine automatisée. Sa cadence d'inspection est compatible avec les impératifs de rentabilité, en particulier dans le cas de pièces à forme complexe. Il est maniable et peu encombrant en sorte qu'il peut facilement être utilisé sur site, la pièce demeurant à l'état monté.

D'autres caractéristiques de l'invention apparaîtront à l'examen des revendications ci-après et des avantages de l'invention apparaîtront à l'examen de la description ci-après, et des dessins annexés, sur lesquels :

- la figure 1 représente schématiquement une installation à base de pièces tubulaires ;

- la figure 2 représente une vue de face d'un dispositif d'inspection de pièces tubulaires, en position de travail sur une partie de l'installation de la figure 1 ;

- la figure 3 représente le dispositif de la figure 2 en vue de côté ;

- la figure 4 représente le dispositif de la figure 3 en coupe selon une ligne IV-IV ;

- la figure 5 représente un capteur multiéléments d'un premier type, vu en perspective ;

- la figure 6 représente un schéma fonctionnel d'une électronique de commande à usage par exemple dans le dispositif des figures 2 à 4 ;

- la figure 7 représente une émission d'ondes ultrasonores à partir d'un capteur multiéléments, en position de travail par rapport à une pièce à inspecter ;

- la figure 8 représente la réflexion et la réfraction d'ondes ultrasonores à la surface d'une pièce à inspecter ;

- la figure 9 représente une évolution de la réfraction d'ondes ultrasonores dans l'acier en fonction de valeurs d'angle d'incidence ;

- la figure 10 est analogue à la figure 9 pour des valeurs d'angle de réfraction ;

- la figure 11A représente la réflexion d'une onde ultrasonore par une imperfection d'un premier type ;

- la figure 11B représente la réflexion d'une onde ultrasonore par une imperfection d'un second type ;

- la figure 12 représente une évolution de l'amplitude de réponse d'une imperfection type en fonction de valeurs d'angle de réfraction dans l'acier ;

- la figure 13 représente schématiquement un diagramme de type A-scan illustrant l'amplitude d'ondes ultrasonores reçues en fonction du temps de vol de ces ondes.

- la figure 14 représente un diagramme de type A-scan illustrant l'amplitude d'ondes ultrasonores reçues en fonction de la distance parcourue par ces ondes ;

- la figure 15 représente une séquence d'inspection à l'aide d'un capteur multiéléments selon un premier aspect de l'invention ;

- la figure 16 est un diagramme de type B-scan illustrant le résultat d'une séquence d'inspection selon le premier aspect de l'invention ;

- la figure 17 représente un diagramme de type C-scan en tant que résultat d'une pluralité de séquences d'inspections selon le premier aspect de l'invention ;

- la figure 18 représente une carte d'imperfections correspondant au diagramme de la figure 17 ;

- la figure 19 représente une carte d'imperfections d'une partie d'une installation à base de pièces tubulaires ;

- la figure 20 représente un tir d'inspection selon un second aspect de l'invention ;

- la figure 21 représente une séquence d'inspection selon un troisième aspect de l'invention ;

- la figure 22 représente un capteur multiéléments en tant que variante du capteur de la figure 5 ;

- La figure 23 montre une séquence d'inspection en tant que variante de la séquence de la figure 15 ;

- La figure 24 représente un capteur multiéléments en tant qu'autre variante encore du capteur de la figure 5.

Les dessins annexés contiennent des éléments de caractère certain et pourront par conséquent servir non seulement à compléter l'invention, mais aussi contribuer à sa définition, le cas échéant.

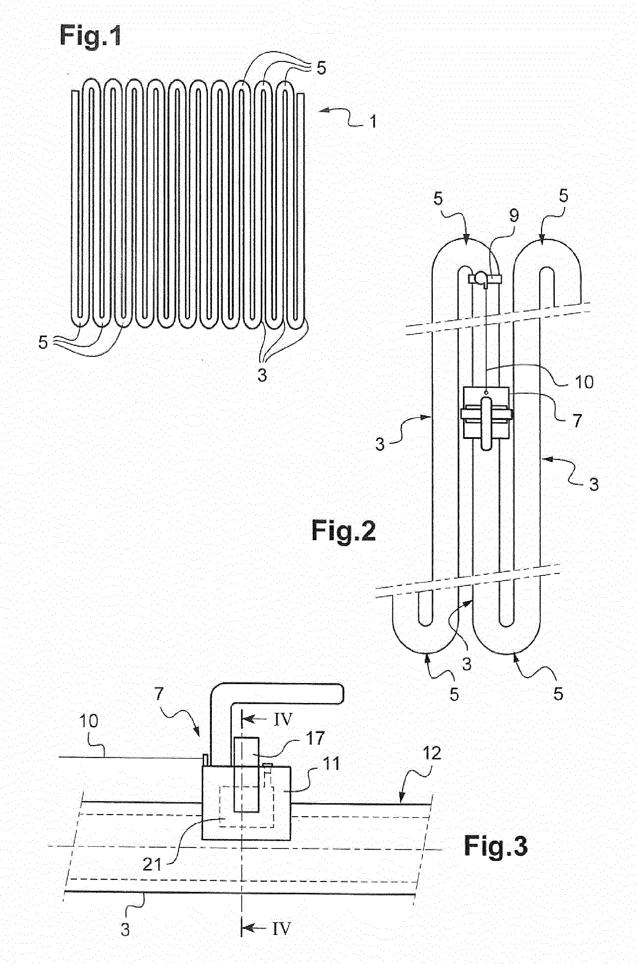

On fait référence à la figure 1.

Elle montre un exemple d'installation à base de pièces tubulaires sous la forme d'une conduite 1 comprenant une pluralité de segments tubulaires 3 rectilignes, disposés les uns à proximité des autres et reliés entre eux par des coudes tubulaires 5. La conduite 1 s'étend généralement dans un plan. La conduite 1 peut être vue comme faisant partie d'un panneau de pièces tubulaires, à usage par exemple en tant qu'échangeur thermique entre un fluide en circulation à l'intérieur des pièces tubulaires et une source de chaleur disposée à l'extérieur de ces pièces, d'un côté au moins du panneau.
La conduite 1 doit être contrôlée. Chaque segment 3 doit être inspecté à la recherche d'imperfections dans sa paroi, en particulier de fissures, notamment radiales, que ces imperfections se situent sur la surface interne du segment 3, sur sa surface externe, ou à proximité de l'une ou l'autre de ces surfaces. L'inspection doit être réalisée sur toute la longueur de chaque segment 3 et couvrir une partie de sa section transversale de l'ordre d'une demi-circonférence. Autrement dit, il faut contrôler au moins une face du panneau formé par la conduite 1, habituellement celle disposée du côté de la source de chaleur dans le cas d'un échangeur thermique.
Du fait de l'écart assez faible séparant à chaque fois deux segments 3 l'un de l'autre, il est pratiquement impossible d'inspecter chaque segment 3 à l'aide d'un dispositif se translatant transversalement et/ou pivotant autour du segment 3. D'ailleurs, les segments 3 pourraient être jointifs les uns des autres.
D'autre part, une telle technique serait trop lente pour pouvoir être mise en œuvre industriellement.

On fait référence à la figure 2.

Elle montre un dispositif d'inspection, notamment pour l'installation de la figure 1. Le dispositif d'inspection comprend un chariot 7 portatif en appui sur la surface extérieure d'une pièce tubulaire à contrôler, ici un segment 3. Le chariot 7 peut être déplacé selon une direction longitudinale du segment 3, ici manuellement. En variante, le chariot 7 peut être motorisé, au moins pour aider l'opérateur dans ce déplacement.
Ici, le dispositif d'inspection comprend en outre un encodeur de position relié au chariot 7 et délivrant en sortie une donnée que l'on peut faire correspondre à une position du chariot 7 par rapport au segment droit 3, au moins selon la direction longitudinale de ce segment.
Ici, l'encodeur de position prend la forme d'un capteur à fil 9, attaché au segment 3, à proximité d'une extrémité longitudinale de celui-ci. Une extrémité d'un fil 10 est attachée au chariot 7 tandis que l'autre extrémité est attachée au capteur 9. Le déplacement du chariot 7 provoque un enroulement ou un déroulement du fil 10, selon le sens de déplacement du chariot 7. Une donnée de position peut être déduite de la longueur de fil déroulé et/ou enroulé, du nombre de tours effectués par l'enrouleur et/ou d'impulsions correspondant à un pivotement angulaire de l'enrouleur.
En variante, l'encodeur de position peut prendre des formes de réalisation différentes, y compris un dispositif monté sur le chariot 7. Par exemple, l'encodeur de position peut être de type mécanique, linéaire ou rotatif, électromagnétique, optique, ou prendre encore la forme d'un accéléromètre. Le choix du type d'encodeur peut dépendre de la géométrie de l'installation, au moins sur la zone à inspecter, et/ou des pièces élémentaires qui la composent. Par exemple pour inspecter une portion tubulaire courbe d'une installation, par exemple un coude 5 de l'installation 1, il est préférable d'utiliser un encodeur mécanique.

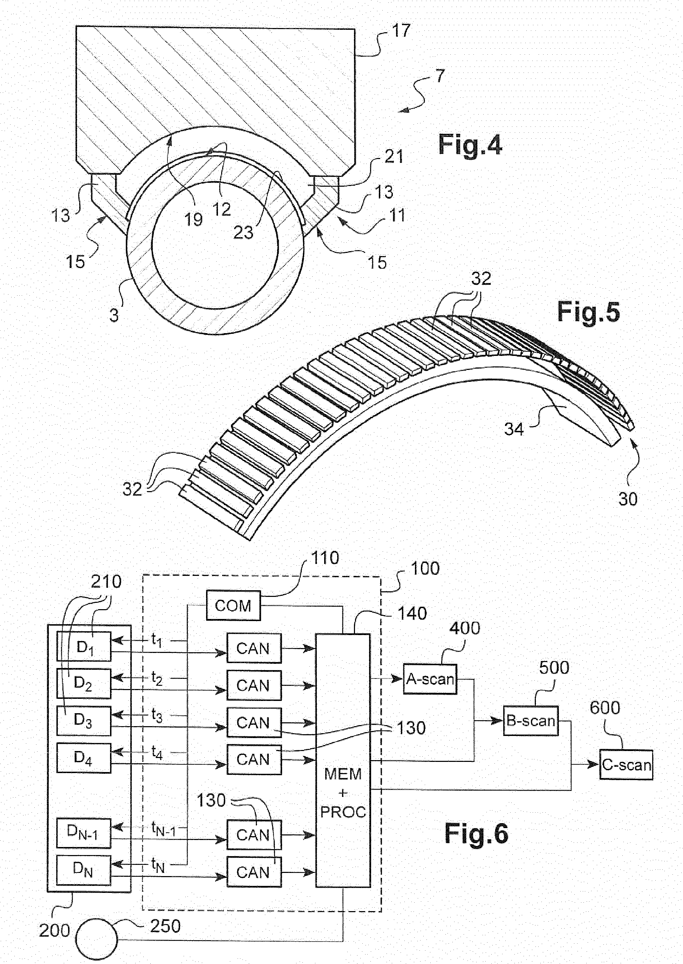

On fait référence aux figures 3 et 4.

Le chariot 7 comprend un support 11 comprenant une première face en appui contre la surface extérieure 12 du segment 3 et de forme correspondant à une partie au moins du profil du segment 3.
Ici, le support 11 est réalisé sous la forme d'un profilé de forme générale en U, dont les branches 13 viennent se positionner de part et d'autre du segment 3, en travers de celui-ci. Chacune des branches 13 se termine en un tronçon 15 dirigé vers l'intérieur du U et qui participe au maintien du support 11 en position par rapport au segment 3.

La première face du support 11 est conformée en un guide apte à coopérer avec la surface extérieure du segment 3 à contrôler pour positionner le chariot 7 par rapport au segment 3. Cette première face agit également pour guider le chariot 7 en translation par rapport au segment 3, selon la direction longitudinale de ce dernier. En d'autres termes, la première face du support 11 peut être vue comme une face de guidage/positionnement du chariot 7 par rapport au segment 3.

Le chariot 7 comprend en outre un traducteur ultrasonore 17 monté sur le support 11, sur une seconde face de celui-ci, opposée à la première face.

Le traducteur ultrasonore 17 présente une face active, orientée vers la face de guidage du chariot 7, pour l'émission et la réception d'ondes ultrasonores. La face active comprend une surface d'émission/réception 19 sur laquelle est régulièrement répartie une pluralité de transducteurs élémentaires, de type électroacoustique, selon une première direction, perpendiculaire aux branches 13 du support 11. Lorsque le chariot 7 est en position par rapport au segment droit 3 par l'intermédiaire du guide de positionnement, cette première direction correspond à une direction transversale de ce segment droit 3.

Chaque transducteur élémentaire peut fonctionner indépendamment des autres. En particulier, chaque transducteur élémentaire peut être excité de manière à émettre des ondes ultrasonores tandis qu'il réagit à la réception d'ondes de ce type en délivrant un signal électrique. Chaque transducteur élémentaire est capable d'opérer en tant qu'émetteur/récepteur.

La surface d'émission/réception 19 s'étend sensiblement entre les branches 13 du support 11.

Ici, la surface d'émission/réception 19 est courbe. Elle présente une forme correspondant au profil du segment 3, au moins sur une portion de celui-ci comprise entre les branches 13 du support 11. En d'autres termes, la surface d'émission/réception 19 est conformée de manière à suivre, à distance constante lorsque le chariot 7 est en position, la portion en question du profil du segment 3. Dans le cas particulier illustré par la figure 4, la surface d'émission/réception 19 est conformée en une partie de cylindre de section circulaire, qui correspond au profil circulaire des segments 3. La surface d'émission/réception 19 et le profil circulaire des segments 3 sont mutuellement concentriques.

Ici la distance qui sépare la surface d'émission/réception 19 de la surface extérieure 12 du segment 3 est d'environ 14,5 millimètres. Le segment 3 présente un rayon de 25,5 millimètres tandis que la surface d'émission/réception 19 présente un rayon de courbure de 40 millimètres.

La surface d'émission/réception 19 s'étend ici sur une portion angulaire d'environ 110°. En conséquence, ni le traducteur 17 ni le support ne viennent buter contre les segments 3 adjacents au segment 3 sur lequel est positionné le chariot 7. Dans cette configuration, le traducteur 17 est de type dit "semi-encerclant". Les transducteurs élémentaires sont régulièrement répartis, de manière angulaire, en regard d'une portion de la surface extérieure 12 du segment 3 à contrôler.

L'étendue angulaire de la portion d'émission/réception 19 dépend essentiellement de l'espace laissé libre entre deux segments 3 adjacents. Pour maximiser la zone du segment 3 qu'il est possible d'inspecter, il est préférable de faire s'étendre au maximum la surface d'émission/réception 19.

Le dispositif d'inspection comprend en outre un mécanisme de couplage acoustique, solidaire du chariot 7, intercalé entre la face active du traducteur 13 et la surface extérieure 12 du segment droit 3. Le mécanisme de couplage est actif lorsque la face de guidage du support 11 est en contact avec le segment 3, quelle que soit la position longitudinale du support 11 par rapport au segment 3.

Ici, le mécanisme de couplage comprend une boîte 21 remplie d'eau et fermée par une membrane souple 23. La membrane 23 fait partie de la face de contact du chariot 7 avec le segment 3. Elle épouse la forme du segment 3, sur une portion angulaire de celui-ci correspondant à la surface active 19 du traducteur 17. La membrane 23 est réalisée en un matériau qui présente une faible atténuation des ondes ultrasonores, et dans lequel la vitesse de propagation de telles ondes est voisine de celle de l'eau, ou du médium de couplage le cas échéant. Ainsi la présence de la membrane 23 n'influe pratiquement pas sur le calcul des lois de retard appliquées aux transducteurs élémentaires, ni sur la réfraction des ondes ultrasonores. La membrane 23 peut être réalisée en matériau connu sous le nom d'Aqualene.

La souplesse de la membrane 23 permet au dispositif de s'adapter à un état détérioré de la surface extérieure 12 du segment 3. En complément, un gel couplant ou de l'eau peuvent être intercalés entre la surface extérieure 12 et la membrane 23.

En variante, la boîte 21 peut être à écoulement libre, c'est-à-dire dépourvue de membrane 23. La pression de l'eau doit alors être suffisamment élevée pour que l'espace entre la surface d'émission/réception 19 et la surface extérieure 12 demeure remplie d'eau. Des bacs de récupération et un circuit de recyclage pour l'eau peuvent être installés en pareil cas.

La boîte 21 peut être remplacée, en partie au moins, par une semelle souple en matériau aux propriétés acoustiques adaptées à la réfraction des ondes ultrasonores dans l'acier, par exemple de type analogue à celui de la membrane 23, ou par une semelle rigide en un matériau de type plexiglas par exemple.

Optionnellement, le support 11 peut être équipé d'un guide supplémentaire pour faciliter une translation du chariot 7 selon la direction longitudinale du segment 3. En particulier ce guide supplémentaire est agencé pour coopérer avec le guide de positionnement de façon que le chariot 7 conserve sa position transversale par rapport au segment 3 lors de la translation en question. Des rouleaux de guidage peuvent être montés sur le support 11, par exemple sur les branches 13 de celui-ci.

Toujours en option, le chariot 7 peut être équipé d'un mécanisme de contrainte capable de plaquer la membrane 23, la boîte 21 et/ou la semelle sur la surface extérieure 12 du segment 3. On peut par exemple utiliser un ou plusieurs ressorts de compression.

Le dispositif de contrôle comprend en outre une électronique de commande, à laquelle le traducteur 17 et l'encodeur de position 9 sont individuellement reliés.

L'électronique de commande est capable d'envoyer des signaux d'excitation vers chaque transducteur élémentaire du traducteur 17 pour l'émission d'ondes ultrasonores.

On fait référence à la figure 5.

Elle montre un capteur multiéléments 30 à usage par exemple en tant que surface d'émission/réception 19 de la figure 4. Le capteur 30 comprend une pluralité de transducteurs ultrasonores 32, par exemple piézoélectriques, analogues les uns aux autres et répartis en une ligne sur une surface courbe. Chaque transducteur ultrasonore 32 se présente ici sous la forme d'un élément plat rectangulaire. Les transducteurs ultrasonores 32 sont mutuellement alignés selon leur largeur.

Par exemple, les transducteurs ultrasonores 32 présentent ici chacun une largeur de 0,5 millimètres et sont mutuellement espacés de 0,1 millimètres.

Ici, le capteur multiéléments comprend une lame de protection 34, par exemple sous la forme d'une couche de résine de type connu sous le nom de résine époxy.

On fait référence à la figure 6.

Elle représente fonctionnellement une électronique de commande 100 destinée à un capteur ultrasonore multiéléments 200, par exemple le capteur 30 de la figure 5.

Le capteur 200 comprend une pluralité de transducteurs élémentaires 210, référencés e1, e2, ..., ei, ... eN, où N représente le nombre de transducteurs élémentaires 210 du capteur 200. Sur le schéma fonctionnel de la figure 6, les N transducteurs élémentaires 210 sont disposés en une ligne. En réalité, dans un capteur ultrasonore, les transducteurs peuvent être organisés en un tableau et présentent chacun un numéro d'adressage.

Les transducteurs élémentaires 210 sont capables d'opérer en émission/réception dans le capteur ultrasonore 200.

L'électronique 100 comprend une voie d'émission sous la forme d'un circuit de commande 110 électriquement relié à chacun des transducteurs 210. Le circuit de commande 110 est capable d'exciter chaque transducteur 210, c'est-à-dire de lui de faire émettre une onde impulsionnelle, selon une fréquence ultrasonore comprise par exemple entre 1 et 15 MHz. La fréquence ultrasonore utilisée dépend en pratique de la taille des imperfections recherchées. Pour l'application décrite ici, une valeur de l'ordre de 5 MHz est particulièrement adaptée.

L'électronique 100 comprend en outre un processeur 140 dont une sortie est reliée au circuit de commande 110. Le processeur 140 peut activer le circuit de commande 110 pour exciter un ou plusieurs transducteurs élémentaires 210.

Les transducteurs 210 peuvent être excités par groupe, chacun avec un déphasage ou retard temporel respectif par rapport à une origine temporelle commune aux transducteurs du groupe. Génériquement, on note ti le retard temporel à l'excitation du transducteur ei par rapport à son origine temporelle. De la mémoire, par exemple associée au processeur 140, stocke une ou plusieurs lois temporelles d'excitation. Le processeur 140 peut appeler successivement certaines au moins de ces lois pour des sous-ensembles de transducteurs élémentaires pour les faire appliquer par le circuit de commande 110, afin de mettre en œuvre ce que l'on peut appeler une séquence d'inspection.

Le processeur 140 et le circuit de commande 110 agissent ainsi conjointement à la manière d'un contrôleur qui est capable d'appliquer successivement au moins une loi temporelle d'excitation respective à des sous-ensembles de transducteurs élémentaires 210. L'application d'une loi d'excitation temporelle à un sous-ensemble de transducteurs élémentaires 210 résulte en l'émission d'un faisceau d'ondes ultrasonores par les transducteurs élémentaires 210 concernés. Cette émission peut aussi être appelée "tir" dans la technique.

Le capteur 200 est à la fois émetteur et récepteur. Des ondes ultrasonores peuvent être reçues par les transducteurs 210. L'électronique 100 comprend une pluralité de convertisseurs analogique/numérique 130. L'entrée de chaque convertisseur 130 est reliée chacun à un transducteur 210 respective tandis sa sortie est reliée à une entrée respective du processeur 140. Les signaux électriques issus des transducteurs 210 peuvent être ainsi convertis en signaux numériques et mémorisés, par exemple dans la mémoire du processeur 140.

La mémoire stocke les signaux numériques en relation avec une donnée qui permet d'identifier un sous-ensemble des transducteurs 210 auquel la loi d'excitation temporelle a été appliquée.

Le processeur 140 est en outre programmé pour, entre autres choses, remettre en phase les signaux temporels stockés dans la mémoire et correspondant aux transducteurs d'un même groupe. Plus généralement, le processeur 140 est capable d'opérer sur les signaux numériques mémorisés, à chaque fois en relation avec une même donnée d'identification, c'est-à-dire un même sous-ensemble de transducteurs 210. Il agit alors en tant que module de traitement dans l'électronique de commande 100.

Une entrée du processeur 140 peut être reliée à un encodeur à impulsions 250, par exemple l'encodeur 9 de la figure 2.

Le processeur 140 peut en outre être programmé pour sommer les signaux correspondant à chaque tir de chaque groupe de transducteurs pour générer un A-scan 400. Pour remettre les signaux en phase, les retards utilisés à l'émission peuvent dans un mode de réalisation particulier être appliqués de manière inverse, c'est-à-dire qu'on applique en réception les plus grandes valeurs de retard aux signaux reçus par les transducteurs qui ont été excités avec les plus faibles valeurs de retard.

Dans un développement avantageux, une opération de traitement peut comprendre l'application d'une ou plusieurs lois de retard différentes de celles utilisées à l'émission, correspondant à des valeurs d'inclinaison différentes, à chaque signal reçu. Un traitement de ce type est décrit par exemple dans la demande internationale déposée au nom de la présente Demanderesse et publiée sous le numéro WO 2003/50527. Un tel traitement peut améliorer la détection de certaines imperfections, en particulier celles inclinées par rapport à la direction radiale.

Un traitement des données reçues permet de générer des représentations B-scan 500 en cumulant les A-scans dans l'ordre des groupes consécutifs utilisés lors d'un balayage circonférentiel. Enfin les représentations C-scan 600, ou cartographies, peuvent être reconstruites en cumulant les informations des B-scans corrélées à la distance parcourue lors de la translation du dispositif le long des pièces tubulaires.

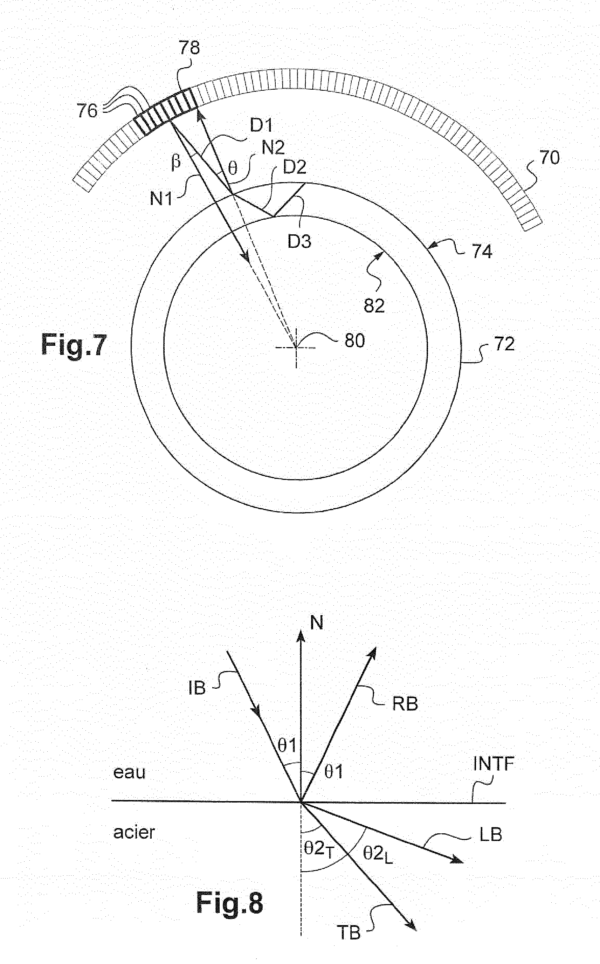

On fait référence à la figure 7.

Elle montre un capteur multiéléments 70, analogue au capteur 30 de la figure 5, en position par rapport à un tube 72, en regard d'une portion d'une surface extérieure 74 de celui-ci.

Une loi d'excitation temporelle peut être calculée de manière que des transducteurs élémentaires 76 d'un sous-ensemble 78 produisent conjointement un faisceau d'ondes ultrasonores. Le faisceau émis est représenté par sa direction de propagation D1 sur la figure 7.

<u>**Dans un plan transversal du tube 72,**</u> la direction D1 du faisceau émis est inclinée d'un angle de déflexion $\beta$ par rapport à une direction normale N1 à la surface du capteur 70 proche de la surface extérieure 74, au moins en une position sensiblement médiane, respectivement centrale, du groupe de transducteurs 78. Le capteur 70 est ici positionné par rapport au tube 72 de telle sorte que la direction normale N1 passe par le centre 80 de la section transversale du tube 72.

La direction D1 est inclinée d'un angle d'incidence $\theta$ par rapport à une direction normale N2 à la surface extérieure 74 du tube 72, là où la première direction D1 rencontre cette surface extérieure 74.

La loi d'excitation temporelle correspond à l'ensemble des valeurs du retard avec lequel chaque transducteur élémentaire 76 du sous-ensemble 78 est excité par rapport à une origine temporelle commune aux transducteurs élémentaires du sous-ensemble.

La formule de l'annexe A.1 indique de manière générique la valeur de retard $\Delta tn$, exprimé en secondes par exemple, à appliquer au transducteur élémentaire 76 de rang n dans le sous-ensemble 78. Dans cette formule :

- La grandeur $d_n$, exprimée en mètres par exemple, correspond à la distance séparant le premier transducteur du sous-ensemble au transducteur de rang n, considérée du centre d'un transducteur à celui de l'autre transducteur. La distance $d_n$ peut être calculée à partir des dimensions des transducteurs élémentaires et de l'écartement mutuel des transducteurs élémentaires.

- L'angle $\beta$ correspond à l'angle de déflexion dans le médium de couplage, c'est-à-dire à l'inclinaison de la direction de propagation D1 du faisceau par rapport à la normale N1 au plan du transducteur central. Cet angle peut aussi être désigné "angle d'émission".

- La grandeur V correspond à la vitesse des ondes ultrasonores dans le médium de couplage, par exemple 1480 m/s dans l'eau.

Les faisceaux d'ondes ultrasonores émis peuvent être dépourvus de focalisation, ou du moins présenter un lieu de focalisation très éloigné du capteur 70 par rapport à la distance séparant le capteur 70 du tube 72. Dans ce cas, les imperfections à proximité de la surface extérieure 74 du tube et celles à proximité de la surface intérieure du tube 70 peuvent être détectées avec la même sensibilité. En variante, certains au moins des faisceaux émis présentent un lieu de focalisation proche du tube 72, par exemple en sa surface intérieure, sa surface extérieure 74, ou dans l'épaisseur du tube 72. On privilégie alors la détection d'imperfections dans une zone du tube 72 correspondante.

Les formules des annexes A.3 et A.4 permettent de calculer une valeur de l'angle $\beta$ d'inclinaison du faisceau ultrasonore par rapport au capteur en fonction d'une valeur de l'angle d'incidence $\theta$ à la surface extérieure 74 du tube 72.

Dans cette formule :

- La grandeur $r_1$ correspond au rayon extérieur du tube 72.
- La grandeur $r_2$ correspond au rayon de courbure de la surface d'émission/réception de la face active du capteur 70.

On fait référence à la figure 8.

À une interface INTF média de couplage/acier, ici eau/acier, telle que la surface extérieure 12 de la pièce de la figure 4, un faisceau incident d'ondes ultrasonores longitudinales, représenté ici par sa direction principale de propagation IB, présentant un angle d'incidence θ1 non nul par rapport à une direction normale N à l'interface se réfracte en un faisceau d'ondes ultrasonores longitudinales qui se propage selon une direction principale LB inclinée d'un angle de réfraction θ2$_L$ non nul par rapport à la direction normale N, et en un faisceau d'ondes ultrasonores transversales qui se propage selon une direction principale TB inclinée d'un angle de réfraction θ2$_T$ non nul par rapport à la direction normale N.

En outre, le faisceau incident se réfléchit partiellement à l'interface INTF en un faisceau d'ondes ultrasonores longitudinales qui se propage selon une direction principale RB inclinée d'un angle de réflexion égal à l'angle θ1 par rapport à la direction N.

À partir d'une valeur de l'angle d'incidence θ1, des valeurs correspondantes des angles de réflexion et de réfraction peuvent être calculées grâce à la formule de l'annexe A.2, où :

- la valeur V1$_L$ correspond à la vitesse des ondes acoustiques longitudinales dans l'eau, soit environ 1480 m/s ;

- la valeur V2$_L$ correspond à la vitesse des ondes acoustiques longitudinales dans l'acier, soit environ 5900 m/s ;

- la valeur V2$_T$ correspond à la vitesse des ondes acoustiques transversales dans l'acier, soit environ 3230 m/s.

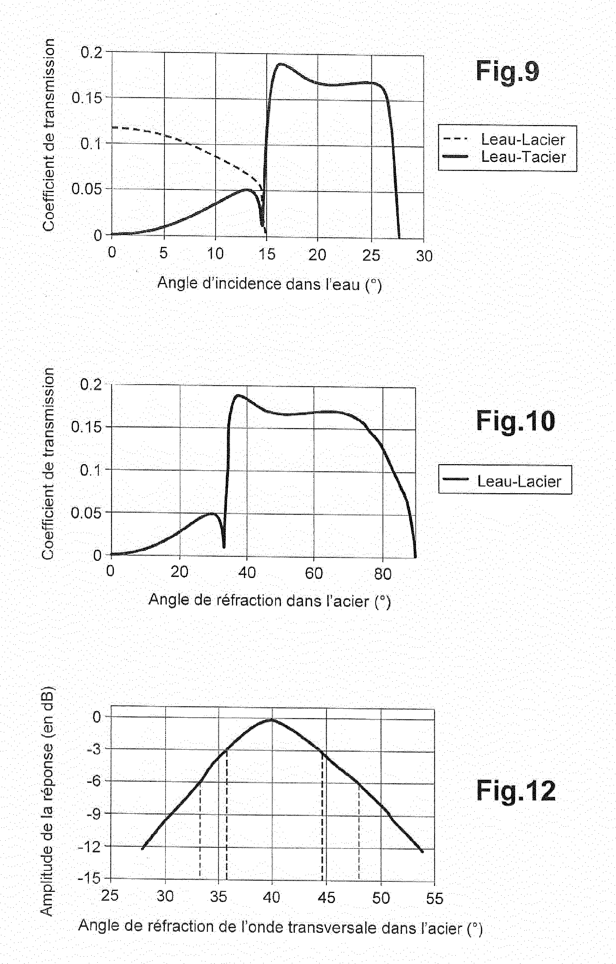

On fait référence à la figure 9

Elle montre un diagramme illustrant l'évolution de la valeur du coefficient de transmission (ordonnée) d'un faisceau d'ondes ultrasonores longitudinales incident se propageant dans l'eau et se réfractant, d'une part, en un faisceau d'ondes ultrasonores longitudinales dans l'acier (trait tireté), et, d'autre part, en un faisceau d'ondes ultrasonores transversales dans l'acier (trait plein), à chaque fois en fonction de valeurs d'angle d'incidence (abscisse). Plus la valeur du coefficient est élevée, plus l'énergie de l'onde concernée est importante dans l'acier.

Une onde avec une énergie importante améliore les conditions d'inspection. Toutefois, une énergie plus faible peut être compensée, notamment en augmentant les gains en réception.

Le diagramme de la figure 9 montre que :

- pour des valeurs de l'angle d'incidence comprises entre environ 15° et environ 27°, les ondes réfractées sont uniquement transversales ;

- les valeurs du coefficient de transmission en ondes transversales correspondant à des valeurs de l'angle d'incidence comprises entre environ 15° et environ 27° sont nettement supérieures aux plus grandes des valeurs du coefficient de transmission en ondes longitudinales ;

- pour des valeurs de l'angle d'incidence supérieures à environ 27°, les coefficients de transmission en ondes transversales et en ondes longitudinales sont pratiquement nuls. Seules des ondes essentiellement de surface sont générées à l'interface entre l'eau et l'acier. De telles ondes, générées en surface externe d'un produit tubulaire, ne permettent de détecter ni des imperfections à la surface interne du produit tubulaire, ni des imperfections orientées radialement, dans l'épaisseur du produit ou en surface externe de celui-ci.

Il est avantageux, en particulier pour simplifier l'interprétation du contrôle, d'utiliser pour l'inspection de pièces tubulaires des valeurs d'angle d'incidence dans l'eau comprises entre environ 15° et environ 27°, qui correspondent à des valeurs élevées, supérieures à 0,15 environ, du coefficient de transmission en ondes transversales. Ceci permet une inspection avec un haut niveau énergétique.

Des valeurs d'angle d'incidence dans l'eau inférieures à 15° environ, pour lesquelles les deux types d'ondes, longitudinales et transversales, coexistent dans l'acier ne sont pas exclues. L'interprétation des différents rebonds des deux ondes peut cependant se révéler plus complexe.

On fait référence à la figure 10.

Elle montre un diagramme analogue à celui de la figure 9, où l'évolution de la valeur du coefficient de transmission est indiquée en fonction de valeurs d'angle de réfraction, et seulement pour des ondes transversales. Les valeurs hautes du coefficient de transmission correspondent à des valeurs de l'angle de réfraction en ondes transversales comprises entre environ 35° et environ 80°.

On fait de nouveau référence à la figure 7.

En fonction du choix de l'angle d'incidence θ, un faisceau d'ondes ultrasonores, notamment transversales, se réfracte dans l'épaisseur du tube 72, faisceau qui est représenté ici par sa direction de propagation D2. Ce dernier parvient à la surface intérieure 82 du tube 72, ce dont il résulte un faisceau d'ondes ultrasonores réfléchi, représenté par sa direction de propagation D3. Cela correspond à ce que l'on appelle un "rebond" ou "bond" dans la technique. Bien que cela ne soit pas représenté sur la figure 7, le faisceau se propageant selon la direction D3 est réfléchi à la surface extérieure 74 en un autre bond et ainsi de suite.

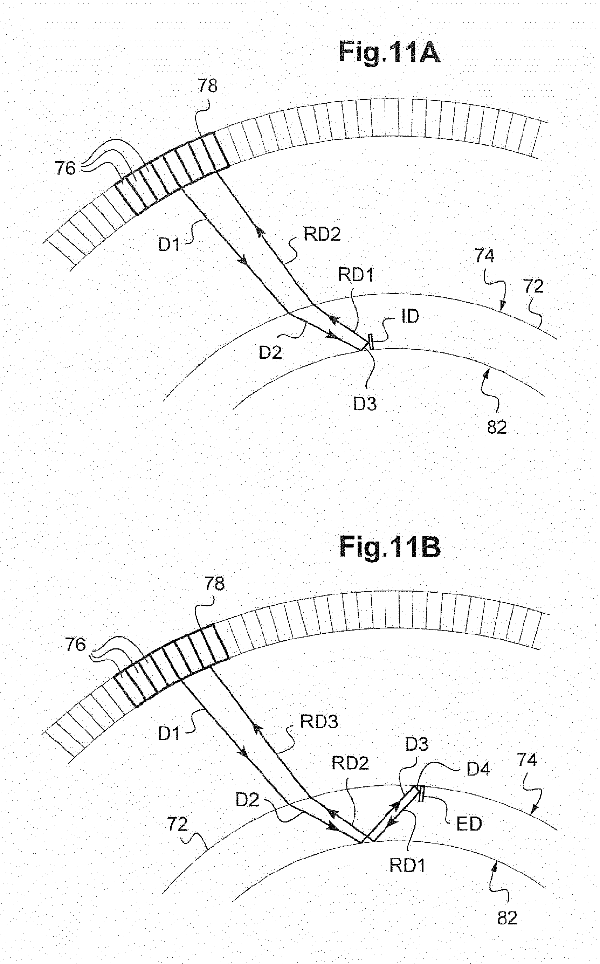

On fait référence à la figure 11A.

De manière analogue à ce qui a été décrit en relation avec la figure 7, l'ensemble 78 de transducteurs élémentaires 76 tels que ceux du traducteur multiéléments 17 de la figure 4, peut émettre vers la surface extérieure 74 de la pièce tubulaire 72 en acier, telle que la surface extérieure 12 d'un segment 3, un faisceau d'ondes ultrasonore qui se propage dans un médium de couplage, par exemple de l'eau, selon une première direction D1. Le faisceau émis se réfracte en la surface extérieure 74 en un faisceau d'ondes ultrasonores qui se propage généralement selon la seconde direction D2. Le faisceau réfracté est réfléchi à l'interface acier/air formée par la surface intérieure 82 de la pièce 72 en un faisceau se propageant principalement selon la troisième direction D3.

Lorsque ce faisceau réfléchi rencontre une surface d'une imperfection ID, ici interne et radiale, cette dernière renvoie un faisceau d'ondes ultrasonores qui se propage principalement selon une première direction de retour RD1. À l'interface formée par la surface extérieure 74 et le médium de couplage, le faisceau renvoyé se réfracte en un faisceau d'ondes ultrasonores se propageant selon une seconde direction de retour RD2. Ce dernier peut être capté par des transducteurs élémentaires 76 en regard de la surface extérieure 74. Dans le cas d'une pièce tubulaire et d'une imperfection s'étendant généralement de manière radiale, le faisceau renvoyé est principalement reçu par les transducteurs 76 du sous-ensemble 78 utilisés pour l'émission.

De manière analogue, non représentée sur la figure 11A, le faisceau réfracté se propageant selon la seconde direction D2 pourrait se réfléchir sur une imperfection interne sans réflexion préalable sur la surface intérieure 82 de la pièce 72.

Le faisceau d'ondes ultrasonores réfracté se propageant selon D2 est adapté à la détection d'imperfections longitudinales localisées à la surface intérieure 82 de la pièce 72, ou à proximité de celle-ci. Des imperfections présentant une telle configuration comprennent en particulier les fissures de corrosion ou de fatigue.

On fait référence à la figure 11B.

Elle est analogue à la figure 11A, à l'exception que le faisceau réfracté se propageant selon la direction D2 ne rencontre aucune imperfection jusqu'à la surface interne 82 de la pièce 72. Il s'y réfléchit en un faisceau se propageant selon la direction D3, lui-même réfléchi à la surface extérieure 74 de cette pièce 72 en un faisceau se propageant selon une quatrième direction D4. Ce dernier rencontre une face d'une imperfection ED, ici externe et radiale, et s'y réfléchit en un faisceau se propageant selon la première direction de retour RD1, réfléchit par la surface interne 82 en un faisceau se propageant selon une seconde direction de retour RD2 qui se réfracte à la surface extérieure 74 de la pièce 72 en un faisceau se propageant selon une troisième direction de retour RD3. Ce dernier est reçu par des transducteurs élémentaires 76. Du fait de l'orientation radiale de l'imperfection ED dans la pièce 72, le faisceau se propageant selon la troisième direction de retour RD3 est principalement reçu par transducteurs élémentaires 76 du sous-ensemble 78 utilisé pour l'émission.

Le faisceau selon la direction D2 est adapté à la détection d'imperfections longitudinales situées au voisinage de la surface extérieure 74 de la pièce 72, ou à proximité de celle-ci.

Les figures 11A et 11B montrent chacune un trajet principal des faisceaux d'ondes ultrasonores, correspondant aux directions de propagation des faisceaux utiles à la détection d'une imperfection. En pratique, des faisceaux secondaires, ou annexes, peuvent être générés, par réfraction ou réflexion, à chaque fois qu'un faisceau utile rencontre une interface acier/médium de couplage ou acier/air. Ces faisceaux secondaires ne sont pas utiles à la détection d'imperfections dans la pièce 72, du moins pas directement. Pour cette raison et aux fins de simplification, le trajet des faisceaux secondaires n'a pas été indiqué sur les figures 11A et 11B. Sur la figure 11B par exemple, le faisceau se propageant selon la troisième direction D3 génère, à l'interface acier/médium de couplage, un faisceau d'ondes ultrasonores réfractées (non illustré) dans le médium de couplage, en plus du faisceau d'ondes réfléchies se propageant selon la quatrième direction D4. À la différence du faisceau se propageant selon la direction RD3, le faisceau d'ondes réfractées en question n'est pas reçu par les transducteurs élémentaires 76 du sous-ensemble 78 émetteur.

Les figures 11A et 11B montrent que certaines au moins des ondes ultrasonores émergeant de la pièce 72, en particulier celles issues d'une réflexion par une imperfection orientée radialement, sont reçues par les transducteurs élémentaires du sous-ensemble émetteur, ou du moins certains d'entre eux.

Selon un mode de réalisation du dispositif d'inspection, celui-ci comprend une électronique, ou module, de traitement, par exemple le processeur 140 de l'électronique 100 de la figure 6, agencée pour traiter seulement les signaux reçus par les transducteurs élémentaires du sous-ensemble qui a émis le faisceau incident. Dit autrement, l'électronique de traitement opère alors à chaque fois sur des représentations numériques de signaux électriques résultant d'une réception d'ondes ultrasonores par les transducteurs élémentaires du sous-ensemble auquel une loi temporelle d'excitation vient d'être appliquée. Le temps nécessaire au traitement des signaux reçus est dans ce cas réduit, et reste compatible avec une cadence d'inspection classique, tout en permettant la détection d'imperfections radiales.

Selon un mode de réalisation différent, l'électronique de traitement est agencée pour traiter les signaux reçus sur l'ensemble des transducteurs élémentaires du capteur en réponse à l'émission d'un faisceau d'ondes ultrasonores par un sous-ensemble seulement de ces transducteurs. Entre autres choses, le dispositif d'inspection permet alors de détecter des imperfections orientées de manière différente dans la pièce, c'est-à-dire orientées de manière non radiale.

Selon un autre mode de réalisation encore, l'électronique de traitement peut être agencée de manière à ne traiter que des signaux reçus sur un ou plusieurs sous-ensembles de transducteurs élémentaires distincts du sous ensemble émetteur.

On fait référence à la figure 12.

Elle montre un diagramme indiquant l'amplitude de l'écho (ordonnée), ou réponse, renvoyé par une imperfection typique (proche de la surface interne) en fonction de la valeur de l'angle de réfraction d'un faisceau d'ondes ultrasonores transversales dans l'acier (abscisse).

Les valeurs d'amplitude correspondent au cas d'une pièce tubulaire présentant un diamètre extérieur de 51 millimètres et une épaisseur de 5 millimètres. L'imperfection typique prend la forme d'une entaille dans la paroi de la pièce s'étendant selon la longueur de la pièce et radialement à celle-ci. L'entaille débouche sur la surface intérieure de la pièce et s'étend jusqu'à une profondeur de 0,5 millimètre.

La fréquence des ondes ultrasonores émises est voisine de 5 mégahertz.

Des valeurs d'angle de réfraction voisines de 40° sont optimales. Dans le cas d'eau en tant que médium de couplage, cela correspond à des valeurs d'angle d'incidence voisines de 17°. Des valeurs d'angle de réfraction comprises entre environ 33° et environ 47° permettent d'obtenir une amplitude d'écho relative supérieure à -6 décibels. Des valeurs d'angle de réfraction comprises entre environ 37° et environ 45° permettent d'obtenir une amplitude d'écho relative supérieure à -3 décibels.

Un faisceau d'ondes ultrasonores transversales réfracté qui se propage selon une direction inclinée de 40° environ par rapport à la direction normale à la surface extérieure de la pièce tubulaire à inspecter est préféré en ce qu'il permet de détecter des imperfections internes et externes et d'utiliser au mieux l'énergie du traducteur ultrasonore.

Aux fins de simplification, on a limité le diagramme de la figure 12 à des valeurs d'angle de réfraction comprises entre environ 26° et environ 54°. Des valeurs d'angle de réfraction inférieures à 26° ou supérieures à 54° peuvent cependant être envisagées.

Pour un capteur multiéléments d'une configuration donnée, plus la valeur de l'angle de déflexion du faisceau émis est élevée, plus grand est le risque d'apparition de ce que l'on appelle un "lobe secondaire". Ce lobe secondaire résulte d'interférences indésirables entre des faisceaux d'ondes ultrasonores émis respectivement par des transducteurs élémentaires différents. Ces interférences produisent, en plus du faisceau d'ondes ultrasonores désiré, ou primaire, un faisceau secondaire qui se propage selon une direction généralement opposée à la direction de propagation du faisceau primaire. De manière générale, un tel phénomène nuit à l'efficacité de l'inspection. En particulier, il peut conduire à une double détection d'une imperfection ou encore à la génération de fausses alarmes.

En pratique, pour éviter l'apparition d'un lobe secondaire, l'angle de réfraction est limité à des valeurs compatibles avec une valeur maximale de l'angle de déflexion. Cette valeur, propre à chaque configuration de capteur multiéléments, dépend notamment :

- de la largeur des transducteurs élémentaires (plus les éléments sont étroits plus la valeur maximale est élevée) ; et
- de la longueur d'onde dans le médium de couplage, c'est-à-dire de la vitesse de propagation des ondes ultrasonores dans le médium et de la fréquence d'excitation (plus la fréquence est élevée plus la valeur maximale est réduite).

La configuration de son capteur permet au dispositif d'inspection de mettre en œuvre des valeurs d'angle de réfraction variables jusqu'à une valeur correspondant à la valeur maximale de l'angle de déflexion permis par le capteur.

Dans le cas où de l'eau est utilisée en tant que médium de couplage, et avec un capteur multiéléments du type décrit en figure 5 utilisé à une fréquence de 5 mégahertz, la valeur maximale de l'angle de déflexion, en dessous de laquelle l'énergie des lobes secondaires demeure suffisamment restreinte pour ne pas affecter la qualité du contrôle est d'environ 15°. Pour un capteur présentant un rayon de courbure de 40 millimètres, à une hauteur de 14,5 millimètres d'un tube de 25,5 millimètres de rayon, cela correspond à une valeur maximale de l'angle d'incidence dans l'eau de 24° environ, correspondant à un angle de réfraction en ondes transversales de 62,5°.

En pratique, des valeurs d'angle de réfraction comprises entre à peu près 35° et à peu près 60° sont particulièrement adaptées, ce qui correspond à des valeurs d'angle incident dans l'eau comprises entre 15° et 23,5°.

De préférence, le dispositif d'inspection proposé comporte un capteur utilisable à une fréquence élevée, de l'ordre de 5 mégahertz par exemple. Le dispositif permet ainsi de détecter des imperfections de faible profondeur.

La configuration géométrique du capteur et son positionnement par rapport à la pièce à inspecter peuvent être adaptés de manière à réduire l'angle de divergence nécessaire pour des conditions d'inspections données (angle d'incidence et angle de réfraction).

Selon une configuration particulièrement favorable, le dispositif d'inspection comprend un capteur de type semi-encerclant, tel que montré sur les figures 5 et 7 par exemple, dont la courbure correspond sensiblement à celle de la pièce à contrôler. Dans cette configuration, les faisceaux ultrasonores émis par les sous-ensembles sont défléchis de manière identique pour un même angle de réfraction.

De préférence, la surface active du traducteur ultrasonore se trouve à une distance de la surface extérieure de la pièce à inspecter suffisamment importante pour que l'angle de déflexion à imposer demeure faible. Cette distance peut correspondre à la hauteur d'une boîte à eau, par exemple la boîte 21 de la figure 4. De préférence, cette distance est supérieure à 10 millimètres.

À titre d'exemple uniquement, avec un capteur du type de la figure 5, et pour un tube à inspecter de diamètre extérieur de 51 millimètres, avec une distance entre la surface active du capteur et la surface extérieure de ce tube de 14,5 millimètres, une valeur d'angle de déflexion de 10,7° permet de produire un faisceau présentant un angle d'incidence de 17° environ dans l'eau. Dans les mêmes conditions, il faut un angle de déflexion d'environ 14.1° à une distance de 5 millimètres environ.

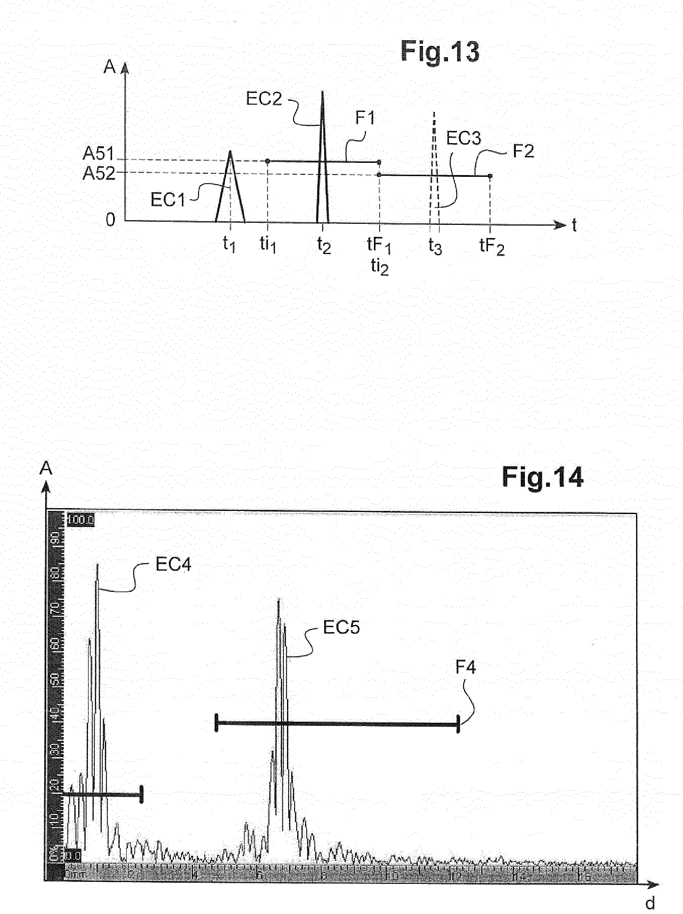

On fait référence à la figure 13.

En réponse à l'émission d'un faisceau d'ondes ultrasonores par un sous-ensemble de transducteurs élémentaires, ces transducteurs élémentaires peuvent recevoir des ondes ultrasonores. Ces ondes sont converties en signaux numériques et enregistrées dans la mémoire de l'électronique de commande en relation avec une base temporelle.

Le diagramme de la figure 13 montre un tel signal. L'amplitude du signal reçu est indiquée en ordonnée, tandis que la base temporelle, correspondant à un temps de vol des ondes ultrasonores depuis leur émission (date d'origine du repère), est portée en abscisse.

Le signal reçu présente un premier pic d'amplitude EC1, à un instant t1, lequel correspond à la réflexion d'une partie du faisceau d'ondes ultrasonores incident à la surface de la pièce tubulaire contrôlée. Le pic EC1 peut être qualifié "d'écho d'interface", en ce qu'il résulte du changement de milieu entre le médium de couplage, qui est situé entre les transducteurs et la pièce, d'une part et l'acier de cette pièce d'autre part. Il correspond à une partie de l'énergie diffusée lors de la réflexion du faisceau incident sur la surface extérieure de la pièce qui revient au capteur.

L'intervalle temporel compris entre l'origine et l'instant tl correspond au temps de vol aller-retour du faisceau d'ondes ultrasonores dans le médium de couplage, entre le capteur multiéléments et la surface extérieure de la pièce.

L'amplitude du pic EC1 est assez faible, en particulier plus faible que le pic obtenu dans les procédés de contrôle classiques où le faisceau d'onde ultrasonore incident se propage selon une direction normale à la surface de la pièce tubulaire contrôlée. Cette relative faiblesse de l'amplitude du pic EC1 résulte de l'inclinaison du faisceau incident par rapport à cette direction normale.

En l'absence d'imperfections sur le trajet du faisceau d'ondes ultrasonores réfracté dans la pièce contrôlée, ce dernier se réfléchit dans l'épaisseur de la pièce successivement à l'interface surface intérieure/air et à l'interface surface extérieure/medium de couplage. Dans ce cas, aucun pic d'amplitude n'est plus visible sur le A-scan après le premier pic EC1.

Contrairement aux procédés classiques, où le faisceau incident se propage selon la direction normale à l'interface de la pièce contrôlée, il n'y a pas ici de pic d'amplitude correspondant à l'interface surface interne/air. Ce pic est parfois désigné "écho de fond" dans la technique.

Sur la figure 13, un second pic d'amplitude EC2 survient à une date t2, lequel pic correspond à la réflexion du faisceau réfracté sur une imperfection. L'écart temporel entre les dates t2 et t1 correspond sensiblement à un temps de vol aller-retour des ondes ultrasonores entre la surface extérieure et l'imperfection. Cet écart temporel peut être corrélé à une valeur de profondeur dans l'épaisseur de la pièce tubulaire. Ceci permet de déduire ici que le second pic EC2 résulte d'une imperfection située à proximité de la surface intérieure de la pièce.

Sur le diagramme de la figure 13, on a représenté en trait tireté un troisième pic d'amplitude EC3, à une date t3, qui correspond à la réception d'une partie du faisceau réfracté réfléchie sur une imperfection située au voisinage de la surface extérieure de la pièce tubulaire à contrôler, après un rebond sur sa surface interne.

De la connaissance de la vitesse de propagation des ondes ultrasonores transversales dans l'acier et de l'épaisseur de la pièce tubulaire contrôlée, on peut mettre en relation la base temporelle du diagramme de la figure 13 et la profondeur dans l'épaisseur de la pièce tubulaire.

On peut avantageusement définir une première fenêtre temporelle F1, entre les dates ti1 et tfl, qui correspond à une gamme de profondeur d'imperfections recherchées. L'électronique de commande peut comprendre un système capable d'émettre un signal d'avertissement lorsqu'un pic d'amplitude supérieure à une valeur seuil AS1 est détecté dans la fenêtre temporelle F1.

De la même manière, on a indiqué une seconde fenêtre temporelle F2, entre les dates ti2 et tf2, correspondant à une zone proche de la surface extérieure de la pièce. Le système d'alarme peut être agencé pour émettre un signal d'avertissement lorsqu'un pic d'amplitude supérieure à une seconde valeur seuil AS2 survient dans la fenêtre temporelle F2.

On fait référence à la figure 14.

Elle montre un diagramme de type A-scan, tel qu'il peut être délivré en sortie de l'électronique de commande, par exemple l'électronique 100 de la figure 6.

En principe, ce diagramme A-scan correspond au diagramme de la figure 13 à l'exception de l'amplitude du signal reçu qui y est indiquée de manière relative, par rapport à une hauteur d'écran, étalonnée sur un gain minimal d'une imperfection recherchée, et de la base temporelle qui a été remplacée par une donnée de distance parcourue dans la pièce, déduite de la base temporelle à l'aide d'une valeur de vitesse de propagation dans l'acier.

Le A-scan de la figure 14 montre ainsi un premier pic d'amplitude EC4 à une distance parcourue d'à peu près 0 millimètres correspondant à un écho d'interface, et un second pic d'amplitude EC5, d'amplitude environ 80 %, qui survient dans la fenêtre de distance F4 et à une distance parcourue un peu inférieure à 7 millimètres. Le second pic EC5 correspond par exemple à une imperfection proche de la surface intérieure de la pièce.

Les bornes de la fenêtre de distance F4 peuvent être déterminées en fonction de l'épaisseur de la pièce inspectée. Ceci permet de localiser une imperfection dans l'épaisseur de la pièce à partir de la position du pic correspondant dans la fenêtre.

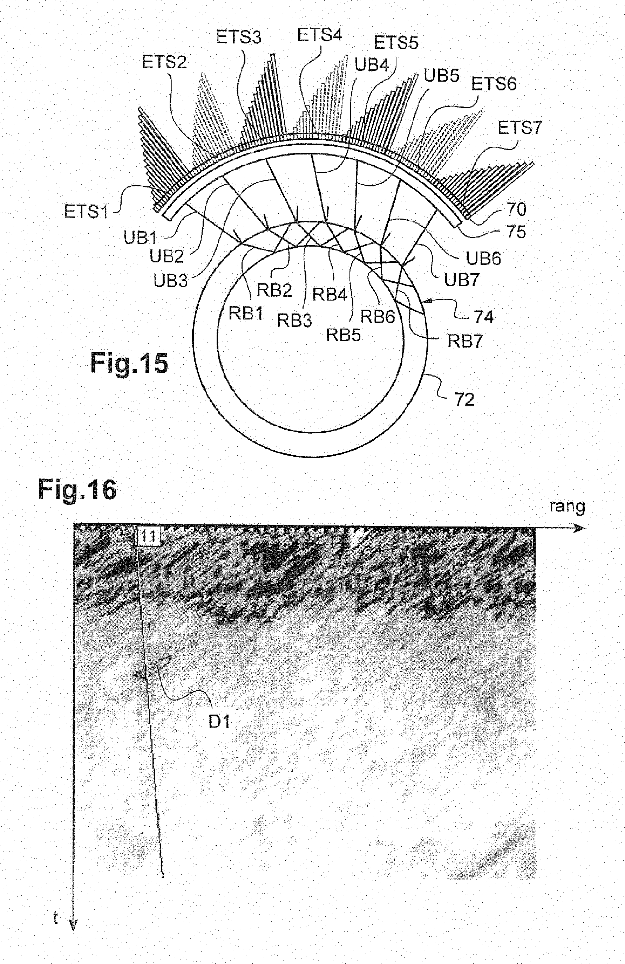

On fait référence à la figure 15.

Elle montre un capteur multiéléments 70 et un tube 72 à inspecter dans une vue analogue à la figure 7. Le capteur multiéléments 70 y est représenté avec une lame de protection 75 pour les transducteurs élémentaires, intercalée entre le capteur multiéléments 70 et la surface extérieure 74 du tube 72.

Selon un aspect de l'invention, l'électronique de commande comprend un contrôleur, comprenant par exemple le circuit de commande 110 et le processeur 140 de l'électronique 100 de la figure 6, agencé pour appliquer successivement une loi temporelle d'excitation respective à des sous-ensembles ETS1, ... ETSN de transducteurs élémentaires mutuellement adjacents selon la première direction. L'excitation successive de chaque sous-ensemble de transducteurs correspond à ce que l'on appelle une séquence_d'inspection. Après chaque application d'une loi temporelle d'excitation, l'électronique de commande mémorise une représentation numérique, par exemple sous la forme d'un signal numérique, d'une partie au moins des signaux électriques résultant de la réception d'ondes ultrasonores par les transducteurs élémentaires. À chaque fois, les représentations numériques sont mémorisées en relation avec une donnée d'identification du sous-ensemble de transducteurs élémentaires auquel la loi temporelle d'excitation a été appliquée.

Chaque loi temporelle d'excitation définit une valeur de retard à l'émission respective pour chaque transducteur élémentaire du sous-ensemble correspondant.

Sur la figure 15, on a représenté à titre d'exemple sept sous-ensembles ETS1, ..., ETS7 de seize transducteurs élémentaires chacun. À chaque fois, des valeurs de retard respectivement appliquées aux transducteurs élémentaires sont représentées sous forme de diagramme à bâtons, chaque bâton étant associé à un transducteur élémentaire respectif et présentant une hauteur proportionnelle à la valeur de retard appliquée au transducteur en question.

Les lois temporelles d'excitation sont telles que les transducteurs élémentaires du sous-ensemble correspondant produisent conjointement un faisceau d'ondes ultrasonores respectif dont la direction de propagation UB1, ..., UB7 est inclinée par rapport à une direction normale à la surface extérieure 74 du tube 72.

Ici, chaque loi temporelle est telle que le faisceau d'ondes ultrasonores émis se réfracte à la surface extérieure 74 du tube 72 en un faisceau d'ondes ultrasonores respectif qui se propage selon une direction respective RB1, ..., RB7 inclinée par rapport à la normale cette surface extérieure 74 d'un angle compris entre 35° et 60°, de préférence voisin de 40°.

Dans un mode de réalisation, tel qu'illustré sur la figure 15, les lois temporelles d'excitation sont calculées de manière que la direction de propagation respective UB1, ..., UB7 de chaque faisceau réfracté présente une même inclinaison ou valeur d'angle de réfraction par rapport à une direction normale à la surface extérieure 74.

Ici, la correspondance de forme entre la surface d'émission/réception du capteur 70 et la surface extérieure 74 du tube 72 permet d'appliquer sensiblement la même loi de retard à chaque sous-ensemble de transducteurs élémentaires ETS1, ..., ETS7.

Chaque séquence d'inspection provoque l'émission successive de faisceaux qui rencontrent chacun la surface extérieure 74 du tube 72 en un lieu d'incidence respectif. De préférence, les lieux d'incidence correspondant à une séquence d'inspection sont régulièrement répartis sur la portion angulaire inspectée de la surface extérieure 72.

Il en résulte un balayage de la section transversale du tube 72 sur une portion angulaire de celle-ci qui dépasse l'étendue angulaire du capteur 70 et/ou celle d'une membrane du type de la membrane 23 de la figure 4. Ce balayage a lieu sans déplacement du capteur 70 par rapport au tube 72.

Les sous-ensembles ETS1, ..., ETS7 de transducteurs élémentaires sont adjacents les uns des autres selon la première direction.

Sur la figure 15, les sous-ensembles ETS1, ..., ETS7 sont en outre disjoints les uns des autres : deux sous-ensembles consécutifs ne présentent aucun transducteur élémentaire en commun. Le dernier transducteur élémentaire de chaque sous-ensemble est physiquement adjacent au premier transducteur élémentaire du sous-ensemble suivant dans la séquence. Cela correspond à une réalisation simple de l'invention, qui présente, entre autres choses, l'avantage d'une séquence d'inspection rapide.

Avantageusement, le contrôleur est agencé pour exciter successivement des sous-ensembles dont certains au moins des transducteurs élémentaires sont en commun. Il en résulte une plus grande précision dans la localisation angulaire des imperfections, conséquence de lieux d'incidences plus rapprochés les uns des autres.

De manière générale, plus le nombre de transducteurs élémentaires communs à deux sous-ensembles excités successivement est grand, meilleure est la localisation angulaire des imperfections (pointé circonférentiel). La séquence comprend un plus grand nombre de tirs.

Les sous-ensembles de transducteurs élémentaires commandés sont déterminés de manière que l'écart entre deux lieux d'incidence adjacents soit suffisamment faible pour qu'une imperfection intercalée entre ces lieux puisse être détecté de manière acceptable.

Selon les tests réalisés par la Demanderesse, un pas de deux transducteurs élémentaires (deux sous-ensembles consécutifs se distinguent l'un de l'autre de deux transducteurs élémentaires selon la première direction) entre deux tirs successifs est suffisant. Un tel pas permet la détection d'une imperfection interne de type entaille longitudinale et radiale de profondeur 0,5 millimètres dans un tube de diamètre extérieur 51 millimètres et d'épaisseur 5 millimètres, en utilisant un capteur ultrasonore à 5 mégahertz. Chaque sous-ensemble comprend 16 transducteurs élémentaires. Pour des imperfections positionnées de manière intermédiaires, entre deux sous-ensembles successifs, l'écart en réponse reste faible, inférieur à 1,5 dB, ce qui confirme l'homogénéité de la détection suivant la zone circonférentielle balayée dans cette configuration.

On fait référence à la figure 16.

Elle montre une image qui correspond à ce que l'on appelle un diagramme B scan, tel qu'il peut être délivré en sortie de l'électronique de commande, par exemple l'électronique 100 de la figure 6.

L'électronique de commande du traducteur du dispositif d'inspection comprend un module de traitement agencé pour cumuler les enregistrements A-scan obtenus pour chaque sous-ensemble de transducteurs élémentaires activés lors de la séquence d'inspection, ou balayage.

En abscisse se trouve indiqué le rang, dans cette séquence, d'un sous-ensemble respectif. Ici, par exemple, la référence "11" correspond au onzième sous-ensemble de transducteurs élémentaires activé.

En ordonnée est portée une base temporelle commune. Pour chaque valeur de rang, l'origine temporelle correspond à l'excitation du premier transducteur élémentaire du sous-ensemble, par rapport auquel les valeurs de retard à appliquer aux autres transducteurs du sous-ensemble sont calculées.

Pour une valeur d'abscisse donnée, le parcours du diagramme de la figure 16 correspond à un A-scan, par exemple un A scan décrit en relation avec la figure 14.

Sur le B-scan, l'amplitude des signaux reçus peut être représentée par une échelle de couleur.

Un diagramme B-scan permet de localiser les imperfections dans l'épaisseur de la pièce tubulaire contrôlée. Une imperfection peut être localisée non seulement dans la profondeur de l'épaisseur du produit, à partir du temps de vol au maximum de l'amplitude des échos ultrasonores, mais encore en position angulaire en déterminant le rang du sous-ensemble de transducteurs qui correspond au maximum d'amplitude. Dit autrement, on peut mettre en relation une partie des signaux numériques mémorisés avec des données de position dans la pièce tubulaire, sous la forme d'un identifiant de sous-ensemble particulier de transducteurs élémentaires. Par exemple, ici, l'identifiant en question comprend une indication de rang dans la séquence d'inspection.

Par exemple, la figure 16 montre une imperfection D1 dans la position angulaire correspond à celle du onzième sous-ensemble de transducteurs élémentaires.

En option, une position plus précise dans la pièce tubulaire peut être recalculée en prenant en compte les angles de réfraction des ondes ultrasonores dans l'acier et leur trajet.

Une séquence d'inspection peut être mise en œuvre pour chaque position longitudinale du chariot 7 par rapport au segment droit 3. Le pas entre deux positions longitudinales est synchronisé avec le temps nécessaire pour effectuer une séquence d'inspection, généralement inférieure à une seconde.

Le pas peut dépendre du nombre de tirs effectués dans une séquence, de la fréquence de récurrence (PRF) de l'électronique, et de la vitesse de contrôle souhaitée.

Par exemple, avec les microprocesseurs actuellement disponibles, la Demanderesse peut obtenir une vitesse de translation de l'ordre d'un mètre par minute avec un pointé axial satisfaisant, typiquement de l'ordre du millimètre. On appelle "pointé axial" la distance entre les lieux d'incidence de faisceaux d'ondes ultrasonore de même rang dans deux séquences successives, mesurée selon la direction longitudinale de la pièce, ou distance parcourue par le chariot entre deux séquences de tirs successives.

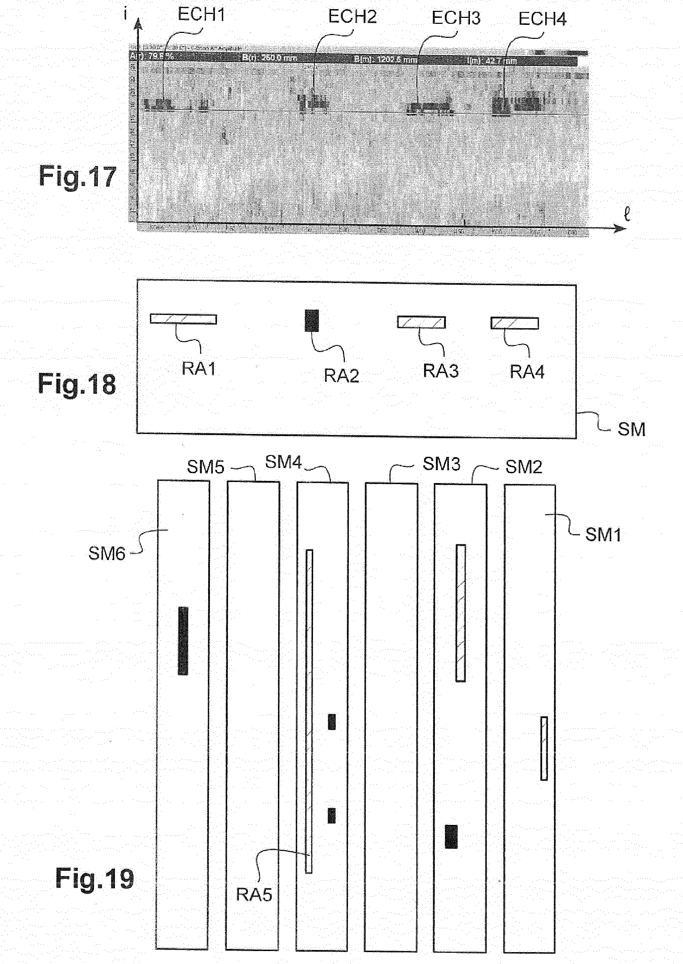

On fait référence aux figures 17 à 19.

Avantageusement, l'électronique de commande est agencée pour utiliser en complément les impulsions d'un encodeur, par exemple l'encodeur 9 de la figure 2, indiquant une position du capteur multiéléments par rapport à la longueur de la pièce tubulaire, pour chaque séquence d'inspection.

Cela permet de construire une cartographie de la pièce, ou représentation C-scan, visible par exemple sur la figure 17.

En abscisse se trouve indiquée la position 1 suivant la longueur de la pièce, à laquelle correspond la séquence d'inspection. Cette longueur peut être obtenue de l'encodeur. En ordonnée se trouve indiqué le rang i du sous-ensemble utilisé dans la séquence. Une position sur l'axe des ordonnées peut être mise en relation avec une position angulaire dans la circonférence dans la zone inspectée. L'amplitude maximale du signal ultrasonore dans une porte de détection est représentée en échelle de couleur. Une cartographie peut ainsi être enregistrée pour chaque porte de détection.

Sur la figure 17 exemple, les sous-ensembles de rang 18 et 19 "voient" un premier écho ECH1, correspondant à une première imperfection, s'étendant entre environ 40 millimètres et 80 millimètres, un second écho ECH2, s'étendant entre environ 250 et 280 millimètres, un troisième écho ECH3, s'étendant entre environ 385 et 445 millimètres, et un quatrième écho ECH4, s'étendant entre environ 495 et 550 millimètres.

Dans une représentation alternative, le temps de vol correspondant à l'amplitude maximum du signal ultrasonore dans la porte sélectionnée peut être indiqué par une échelle de couleur également.

Les C-scans permettent de localiser d'éventuelles imperfections suivant l'axe longitudinal de la pièce, et d'estimer l'étendue de ces imperfections dans cette direction. La méthode normalisée, connue sous le nom de "méthode à -6 dB", consistant à estimer la longueur d'une imperfection par la distance où l'amplitude du signal reste supérieure à la moitié (-6dB) de l'amplitude maximale obtenue pour cette imperfection, est particulièrement adaptée pour estimer l'étendue des imperfections suivant la direction longitudinale de la pièce, c'est-à-dire la longueur de l'imperfection.

Plus la hauteur d'une imperfection, c'est-à-dire son étendue suivant l'épaisseur de la pièce tubulaire, est importante, plus l'amplitude du faisceau réfléchi par cette imperfection est grande. Le dispositif d'inspection peut donc donner une indication qui peut être prise en compte pour qualifier la sévérité des imperfections détectées.

Pour estimer la hauteur d'une imperfection radiale, on peut comparer l'amplitude des échos reçus à des valeurs obtenues sur des pièces analogues (dimensions et matériau similaires) avec des imperfections artificielles, typiquement sous forme d'entailles de profondeur connue. Si la valeur maximale d'amplitude obtenue sur une imperfection naturelle est comprise entre des valeurs d'amplitude observées, par exemple lors d'une phase de calibration, pour deux entailles de référence, de profondeur différente l'une de l'autre, alors l'imperfection naturelle peut être classée dans une gamme d'imperfection définie par des bornes de hauteur correspondant à la profondeur des entailles.

Une estimation plus fine, particulièrement adaptée au cas où une relation linéaire entre l'amplitude des échos et la hauteur des imperfections est vérifiée, comprend le calcul préalable d'un ratio entre une amplitude maximale obtenue pour une entaille de référence et la profondeur de cette entaille, puis l'application de ce ratio aux échos obtenus sur la pièce inspectée.

D'autres approches peuvent être utilisées, telles que par exemple l'utilisation conjointe de l'amplitude maximum des échos sur le signal ultrasonore et la largeur de la réponse de l'imperfection suivant la circonférence du produit, soit le nombre de groupes où les échos relatifs à l'imperfection sont observés.

À la suite de ces traitements, une cartographie simplifiée peut être générée en fin de contrôle, telle qu'elle est visible sur la figure 18 par exemple. Cette cartographie facilite l'interprétation quantitative des résultats des contrôles par les utilisateurs des produits.

Ici, la carte simplifiée SM comprend une zone rectangulaire correspondant à une portion longitudinale d'une pièce inspectée, délimitée en longueur et en circonférence, sur laquelle les zones de la pièce présentant des imperfections sont représentées sous forme de zones de couleurs différentes. Le code couleur peut être représentatif de la classe de sévérité des imperfections détectées dans ces zones. Les dimensions et la position des zones de couleur correspondent aux positions circonférentielle et axiale ainsi qu'à la longueur des imperfections détectées.

La carte simplifiée SM montre une zone rectangulaire RA1 dont l'étendue selon la longueur de la carte SM correspond à celle du premier écho ECH1 de la figure 17, et une seconde zone RA2, une troisième zone RA3 et une quatrième zone RA4 correspondant respectivement aux second, troisième et quatrième échos ECH2, ECH3, ECH4, respectivement. Les zones RA1, RA2, RA3 et RA4 sont pratiquement alignées les unes avec les autres, ce qui signifie qu'elles correspondent à des imperfections situées dans un même secteur angulaire de la pièce contrôlée.

Toujours sur la figure 18, l'amplitude maximale des signaux reçus a été mise en correspondance d'une valeur de niveau de gris. La première zone RA1 et la quatrième zone RA4 présentent sensiblement une même valeur de niveau de gris. Les imperfections correspondantes présentes des hauteurs voisines l'une de l'autre, ou du moins appartenant à une même gamme de valeurs de hauteur. La seconde zone RA2 est plus foncée que la première zone RA1. L'imperfection correspondant à la seconde zone RA2 présente une hauteur plus grande que celle de la première zone RA1.

Ceci peut être réalisé, comme le montre la figure 19, pour chacune des pièces tubulaires d'une installation, par exemple chacun des segments 3 de la figure 1. À chaque pièce tubulaire correspond une carte simplifiée SM1, ... SMN.

Sur la figure 19, les pièces tubulaires correspondant aux référencées SM5 et SM3 sont dépourvues de zones colorées et peuvent être considérées comme étant dépourvues de toute imperfection, tandis que celle référencée SM4 par exemple présente une longue zone colorée RA5 correspondant à une imperfection s'étendant dans la longueur de la pièce tubulaire correspondante.

La résolution du contrôle selon la direction longitudinale de la pièce tubulaire, ou pointé axial, peut être définie en fonction de la résolution de la cartographie souhaitée. Généralement, elle est inférieure à la longueur minimum des imperfections que l'on cherche à détecter.

L'électronique de commande peut calculer en temps réel la vitesse d'avance du chariot par rapport à la pièce tubulaire, en particulier à partir des impulsions de l'encodeur. Lorsque la vitesse d'avance est trop élevée par rapport au temps nécessaire au contrôle d'une zone circonférentielle de la pièce, un signal peut être émis à destination de l'opérateur de contrôle. Le temps nécessaire au contrôle d'une zone circonférentielle est sensiblement le même quelle que soit la position longitudinale du chariot par rapport à la pièce. Elle peut être mémorisée dans l'électronique après qu'une première séquence de tirs a été réalisée ou calculée à partir des paramètres d'inspection, notamment le nombre de tirs à effectuer au cours de cette séquence. En option, une vitesse d'avance trop élevée peut être signalée sur la cartographie par un « trou » dans les acquisitions. Cette cartographie est synchronisée par rapport à la longueur parcourue grâce au traitement des impulsions de l'encodeur.

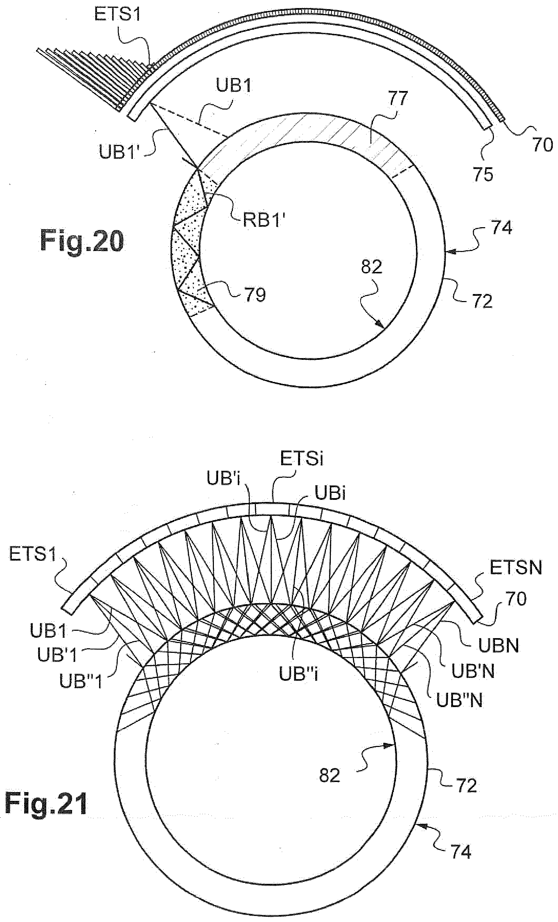

On fait référence à la figure 20.

Elle montre le capteur 70 et le tube 72 à contrôler dans une position relative analogue à celle de la figure 15.

Le contrôleur est agencé pour appliquer une loi temporelle d'excitation telle qu'un sous-ensemble de transducteurs élémentaires situé au voisinage d'une extrémité du capteur 70, ici le premier sous-ensemble ETS1 émette un faisceau ultrasonore incident représenté par sa direction de propagation UB1'. La direction de propagation UB1' est opposée par rapport à la normale (non représentée) à la surface extérieure 74 du tube 72 à la direction de propagation du faisceau UB1 (représentée en pointillés) au lieu d'incidence du faisceau ultrasonore.

Le faisceau ultrasonore incident se propageant selon la direction UB1' résulte en un faisceau ultrasonore réfracté qui se propage dans l'épaisseur du tube 72 selon une direction RB1', et qui s'éloigne du lieu d'incidence en s'éloignant en outre d'une zone primaire 77 de l'épaisseur du tube 72 correspondant à la projection du capteur 70 sur la surface extérieure du tube 72. Le tube 72 peut être inspecté sur une zone étendue 79 (en pointillés) qui dépasse la zone 77 du fait des rebonds successifs du faisceau d'ondes ultrasonores réfracté dans le tube 72, hors de la zone 77.

L'étendue de la zone du tube 72 effectivement inspectée correspond au chemin de ce faisceau dans l'épaisseur du tube 72. Cette étendue dépend en particulier du nombre de rebonds du faisceau réfracté dans l'épaisseur du tube 72 et de l'épaisseur du tube 72. En pratique, le faisceau réfracté peut rebondir jusqu'à six fois tout en conservant un niveau énergétique suffisant pour détecter la présence d'imperfection. Ce nombre maximal de rebonds peut être influencé par l'état des surfaces interne et externe du tube 72.

Un aller-retour dans l'épaisseur du tube 72 peut être désigné par le terme "bond". Sur la figure 20, on a représenté le faisceau réfracté RB1' qui rebondit 5 fois sur les surfaces extérieure et intérieure, ce qui correspond à 2,5 bonds.

Pour certains des sous-ensembles de transducteurs élémentaires, l'inclinaison du faisceau émis peut être modifiée de manière à modifier l'inclinaison du faisceau réfracté par rapport aux faisceaux réfractés résultant de faisceaux incidents émis par les autres sous-ensembles de la séquence. Par exemple, les sous-ensembles correspondant aux transducteurs élémentaires situés aux extrémités latérales du capteur peuvent être commandés pour que le ou les faisceaux réfractés présentent une plus grande inclinaison que les autres, par exemple comprise entre 50° et 60° au lieu d'environ 40°, et atteindre ainsi une zone d'inspection plus large.

Dans le cas de tubes dits "à membrane", c'est-à-dire où les tubes sont reliés les uns aux autres par un élément plat fixé, généralement par une soudure, sur la longueur de deux tubes adjacents, l'augmentation de l'inclinaison du faisceau réfracté peut permettre d'inspecter la zone de fixation de l'élément sur le tube, voire l'élément lui-même, en partie au moins.

Dans un développement avantageux, le contrôleur est agencé pour commander, dans une séquence d'inspection, plusieurs fois chaque sous-ensemble de transducteurs élémentaires, selon des lois temporelles d'excitation différentes les unes des autres et agencées pour émettre des faisceaux se réfractant avec des angles respectifs. Ceci permet, par exemple, de détecter des imperfections légèrement inclinées par rapport à la direction radiale de la pièce. En particulier, chaque séquence d'inspection peut prévoir que chaque sous-ensemble de transducteurs élémentaires émette deux faisceaux incidents mutuellement opposés. Chaque imperfection présente dans la zone d'inspection primaire peut alors être vue selon deux faces mutuellement opposées. Il en résulte une inspection plus fiable, en particulier dans le cas d'imperfections asymétriques.

On fait référence à la figure 21.

Chaque sous-ensemble ETSi du capteur 70 émet au cours d'une séquence d'inspection :

- un premier faisceau d'ondes ultrasonores UBi incliné d'un côté de la direction normale à la surface extérieure de la pièce inspectée, de manière analogue à la figure 15 ;

- un second faisceau d'ondes ultrasonores UB'i incliné d'un même angle de l'autre côté de cette direction normale ;

- un troisième faisceau d'ondes ultrasonores incident UB"i se propageant selon cette direction normale

La conjonction de tirs d'ondes ultrasonores de directions opposées par rapport à la direction normale à la surface à la pièce à contrôler permet d'obtenir un faisceau réfléchi pour chacune des faces d'une imperfection essentiellement radiale de la zone d'inspection primaire, ce qui améliore la détection et la qualification de l'imperfection.

Chaque tir selon la direction normale (UB"i) permet, entre autres choses, de déterminer une valeur d'épaisseur de la pièce là où le faisceau pénètre la pièce.

Une interprétation croisée (ou fusion de données) entre les cartographies obtenues et les cartographies d'épaisseur permet d'estimer l'épaisseur résiduelle de la pièce là où des imperfections ont été détectées. Cette information peut aider à l'estimation de la durée de vie résiduelle de la pièce.

Dans une zone présentant une imperfection, on fait correspondre une valeur d'épaisseur relative à cette zone (la mesure d'épaisseur par tir droit n'est pas affectée par la présence d'une imperfection de type fissure radiale) à une valeur estimée de la hauteur de l'imperfection en question. La soustraction de ces valeurs peut être utilisée en tant qu'estimation d'une valeur d'épaisseur résiduelle, c'est-à-dire l'épaisseur de matériau sain restant dans la zone.

L'utilisateur peut alors comparer cette valeur à une valeur minimale, par exemple obtenue d'un calcul de structure et estimer la durée de vie restante de la pièce et/ou décider du remplacement de celle-ci.

En outre, des tirs droits en plus des tirs inclinés permettent de s'assurer de la qualité du couplage entre le capteur et la surface extérieure de la pièce : tant que l'amplitude des échos de fond est supérieure à une valeur seuil, par exemple définie par l'inspecteur et/ou la procédure de contrôle, le couplage peut être considéré comme efficace.

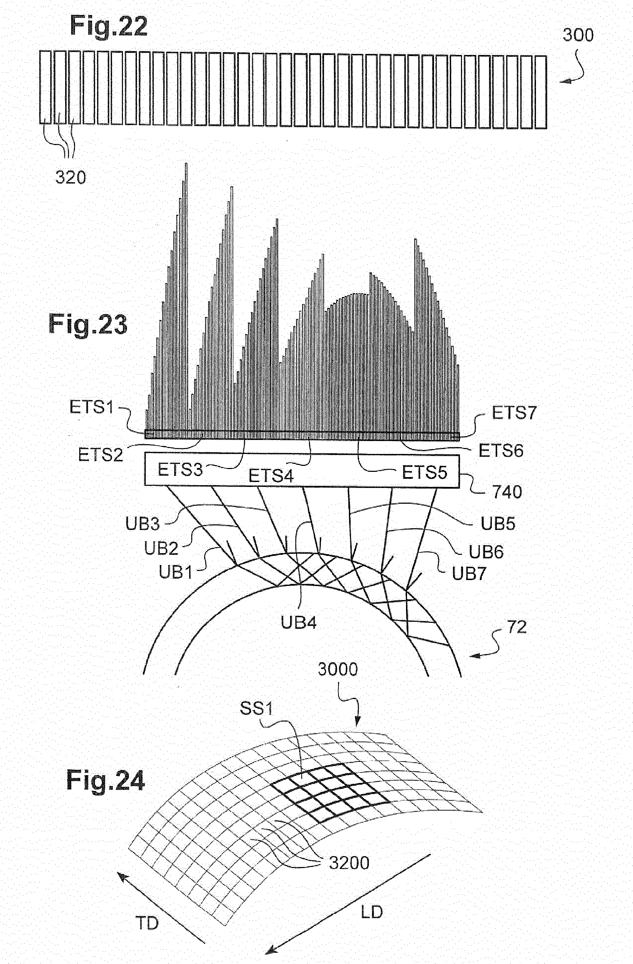

On fait référence à la figure 22.

Elle montre une variante d'un capteur multiéléments à usage par exemple en tant que surface d'émission/réception 19 de la figure 4, sous la forme d'un capteur plan 300.

Le capteur plan 300 comprend une pluralité de transducteurs ultrasonores 320 analogues les uns aux autres et répartis en une ligne sur une surface généralement plane. Les transducteurs ultrasonores 320 sont par exemple analogues aux transducteurs élémentaires 32 décrits en relation avec la figure 5.

Dans une variante non représentée, la surface d'émission/réception peut être généralement courbe et/ou ne pas être concentrique avec le profil de la surface extérieure de la pièce à inspecter. De manière générale, la forme de cette surface d'émission/réception peut différer de celle de la surface extérieure de la pièce à inspecter, en particulier pour des raisons d'encombrement ou de forme de capteur disponible. Le calcul des lois de retard à appliquer doit alors être modifié en conséquence.

Un capteur plan, du type du capteur 300, peut présenter un encombrement plus pratique qu'un capteur courbe, par exemple lorsque les pièces tubulaires sont en contact mutuel par l'intermédiaire de leur surface extérieure respective.

On fait référence à la figure 23.

Elle montre une variante d'un capteur multiéléments sous la forme d'un capteur plan 700, en position par rapport au tube à inspecter 72. Le capteur plan 700 est illustré avec une lame de protection 740

En regard de chaque sous-ensemble de transducteur élémentaires ETSi on a représenté les retards à appliquer à chaque transducteur élémentaire pour que le sous-ensemble en question émettent un faisceau d'ondes ultrasonores UBi qui soit incliné d'un angle d'incidence donné par rapport à la direction normale à la surface extérieure du tube 72 au lieu d'incidence.

À la différence du traducteur semi-encerclant décrit plus haut, des lois de retards à appliquer à chaque sous-ensemble ETSi diffèrent les unes des autres sont.

L'utilisation d'un capteur plan du type du capteur 700 entraîne des lois de retard différentes les unes des autres et une zone inspectée inférieure pour un encombrement selon la première direction du capteur comparable. Le capteur 700 peut cependant être avantageusement utilisé dans certains cas particuliers, notamment en cas d'absence de place suffisante sur l'installation à inspecter pour disposer un capteur semi-encerclant.

On fait référence à la figure 24.

Elle montre une autre variante encore d'un capteur multiéléments à usage en tant que surface d'émission/réception 19 de la figure 4, sous la forme d'un capteur à deux dimensions 3000.

Le capteur à deux dimensions 3000 comprend une pluralité de transducteurs élémentaires 3200 répartis en un motif à deux dimensions, ici sur une surface courbe. Le motif se présente ici sous la forme d'un tableau s'étendant selon deux directions LD et TD perpendiculaires entre elles, l'une, par exemple la direction LD, correspondant à la première direction du traducteur. En variante, la surface sur laquelle sont répartis les transducteurs élémentaires 3200 peut être plane.

Le capteur à deux dimensions 3000 permet en un unique passage de contrôler une pièce tubulaire quant à l'existence d'imperfections longitudinales, comme les capteurs de dimension une décrits plus haut, et d'imperfections transversales et/ou d'imperfections obliques. Pour la détection d'imperfections longitudinales, le processus d'émission/réception est analogue à celui décrit plus haut.

Pour le contrôle d'imperfections transversales, le contrôleur fait émettre des faisceaux d'ondes ultrasonores qui se propagent selon une direction inclinée par rapport à l'axe longitudinal du tube à contrôler et contenue dans un plan contenant cet axe longitudinal. On utilise des lois de retard que l'on applique successivement à des sous-ensembles constitués de transducteurs élémentaires alignés selon une direction parallèle à l'axe longitudinal du tube à contrôler, ici la direction TD.

Pour le contrôle d'imperfections obliques, des lois de retards correspondantes peuvent être appliquées à des sous-ensembles constitués de transducteurs élémentaires appartenant à des lignes et colonnes du capteur à deux dimensions 3000. Dit autrement, on utilise des sous-ensembles de transducteurs élémentaires mutuellement adjacents selon la direction TD comprenant en outre des transducteurs élémentaires mutuellement adjacents selon la direction LD. Par exemple, le sous ensemble SS1 de la figure 24 correspond à un motif carré de quatre éléments de côté.

Des lois temporelles d'excitation peuvent être agencées de manière que les transducteurs élémentaires du sous-ensemble respectif produisent conjointement un faisceau d'ondes ultrasonores incident incliné en outre par rapport à la direction longitudinale de la pièce tubulaire et/ou la direction transversale de cette pièce. Dit autrement, le faisceau d'ondes ultrasonores en question se propage selon une direction qui, en projection dans un plan transversal de cette pièce, est inclinée par rapport à la direction transversale, et/ou qui, en projection dans un plan passant par l'axe longitudinal de la pièce, est inclinée par rapport à la direction longitudinale de la pièce.

On vient de décrire un dispositif d'inspection adapté au contrôle de pièces tubulaires, telles que les segments 3 par exemple, sur une portion de leur circonférence voisine d'une demi-circonférence. Selon les applications, la portion inspectée peut être plus étendue, en particulier s'il est possible d'augmenter l'étendue angulaire de la surface émettrice du traducteur 17 compte tenu de la configuration de l'installation à contrôler et notamment de l'écartement entre deux segments adjacents.

Le dispositif proposé est particulièrement adapté à l'inspection de pièces tubulaires où une zone circonférentielle inférieure ou égale à la demi-circonférence est plus particulièrement sollicitée en fonctionnement. Par exemple, dans le cas d'une installation destinée à réaliser des échanges thermiques, seule une partie de la circonférence de la pièce se trouve exposée à la source de chaleur. La portion de la pièce orientée vers cette source est principalement sollicitée. L'inspection peut être limitée à une zone inférieure ou égale à la demi-circonférence correspondante.

En variante, il est possible de réaliser deux passes d'inspection, chaque passe correspondant à chaque fois à un côté d'un panneau, et plus généralement autant de passes que nécessaire pour couvrir la zone circonférentielle à inspecter.

Le dispositif proposé est particulièrement adapté à l'inspection de pièces tubulaires dans des installations où un démontage de ces pièces n'est pas envisageable. Il est également particulièrement avantageux dans le cas où la pièce tubulaire à contrôler se trouve dans une zone encombrée ou lorsque la pièce, ou la structure dans laquelle elle est montée, présente une géométrie complexe. De ce fait, le dispositif proposé est très utile dans le cas de contrôle sur sites. Il peut également être employé de manière avantageuse sur le site de production de la pièce tubulaire, à chaque fois notamment qu'un banc de contrôle automatique est inutilisable.

Les différents tirs d'ondes ultrasonores sont réalisés consécutivement, groupe d'éléments par groupe d'éléments, lors des balayages circonférentiels. Ainsi les différentes inspections sont réalisées en un seul passage en translation sur la pièce.

Le dispositif d'inspection décrit plus haut se distingue fondamentalement des dispositifs connus en ce qu'il génère un ou plusieurs faisceaux d'ondes ultrasonores incidents inclinés chacun par rapport à une direction normale à la surface extérieure de la pièce à contrôler au lieu d'incidence.

Un faisceau incident qui se propage normalement à cette surface extérieure résulte en un signal reçu comprenant deux échos relatifs à la géométrie de la pièce inspectée : un premier écho, dit d'interface, correspondant à l'interface médium de couplage / pièce, à la surface extérieure de la pièce, et un second écho, dit de fond, correspondant à l'interface pièce / air, à la surface intérieure de la pièce. Si une imperfection est présente dans l'épaisseur de la pièce, avec une orientation principalement perpendiculaire au faisceau ultrasonore, donc tangentielle ou transversale, alors un écho supplémentaire apparait.

Si cette imperfection est proche de la surface extérieure ou de la surface intérieure de la pièce, alors l'écho reçu en réponse peut être confondu avec l'écho d'interface ou de fond respectivement. Et cette imperfection ne peut être convenablement détectée. Dans la technique classique, les zones correspondantes sont parfois désignées "zones aveugles" de ce fait.

En outre, un faisceau ultrasonore réfracté qui se propage dans la pièce tubulaire radialement n'est pas favorable à une réflexion sur des fissures radiales de faible largeur, comme c'est le cas typiquement des fissures de fatigue ou de corrosion.

Le dispositif décrit est particulièrement adapté au contrôle de segments rectilignes de pièces tubulaires. Il peut également être utilisé pour l'inspection de zones courbes, par exemple les coudes 5 de la figure 1. L'encodage de la position peut devoir être adapté. L'invention n'est pas limitée aux modes de réalisation décrits plus haut, à titre d'exemple uniquement, mais englobe toutes les variantes que pourra envisager l'homme de l'art dans l'étendue des revendications annexées.

Par exemple, on a principalement décrit l'utilisation d'eau en tant que médium de couplage. D'autres types de médium peuvent être utilisés. Il convient à chaque fois de déterminer les valeurs d'angle d'incidence correspondant à ce médium, en fonction de la vitesse acoustique des ondes longitudinales dans le médium de couplage en question pour atteindre des angles de réfraction visés. On peut s'aider de la formule de l'annexe A.2 par exemple. Ainsi on a décrit une valeur d'angle d'incidence de 17° dans l'eau correspondant à une valeur préférée d'angle de réfraction de 40° dans l'acier. Cette valeur préférée d'angle de réfraction dans l'acier correspond à un angle d'incidence de 18,5° environ dans l'Aqualene et de 32° environ dans le plexiglas.

De manière analogue, la valeur préférée de l'angle de réfraction de 40° dans l'acier peut être modifiée pour des pièces tubulaires réalisées dans des matériaux différents, toujours à l'aide de la formule de l'annexe A.2 par exemple.

Le dispositif décrit peut comprendre plusieurs chariots de type décrit aux figures 2 à 4 reliés à une même électronique pour améliorer la cadence d'inspection. Dans certaines configurations, les différents chariots peuvent exécuter des lois de commande différentes des transducteurs élémentaires. Les différents chariots peuvent, sous certaines conditions, être équipés de capteurs de configuration différente.

Annexe A : formules mathématiques

Annexe A.1

$$\Delta t_n = \frac{d_n}{V} \sin(\beta)$$

Annexe A.2

$$\frac{sin(\theta 1)}{V1_L} = \frac{sin(\theta 2_L)}{V2_L} = \frac{sin(\theta 2_T)}{V2_T}$$

Annexe A.3

$$\cos(\beta) = \frac{D - r_1 \cdot \sqrt{D} \cdot \cos(\theta)}{r_2 \cdot \left(\sqrt{D} - r_1 \cdot \cos(\theta)\right)}$$

Annexe A.4

$$D = r_1^2 \cdot \left(\cos^2(\theta) - 1\right) + r_2^2$$

**Revendications**

1. Dispositif de contrôle de pièces tubulaires (3, 72), du type comprenant :

   - au moins un chariot (7) équipé de :

      - une pluralité de transducteurs élémentaires (32, 76, 210, 320, 3200) de type électroacoustique, répartis selon au moins une première direction,
      - un guide (11) apte à coopérer avec une surface extérieure (12, 74) d'une pièce tubulaire (3, 72) à contrôler pour positionner le chariot (7) de manière que ladite première direction corresponde sensiblement à une direction transversale de la pièce tubulaire (3, 72);

   - une électronique de commande (100) reliée aux transducteurs électroacoustiques (32, 76, 210, 320, 3200) ;

   **caractérisé en ce que** l'électronique de commande (100) comprend :

      - de la mémoire (140) stockant une ou plusieurs lois temporelles d'excitation ;
      - un ou plusieurs contrôleurs (110; 140) agencés pour appliquer successivement au moins une loi temporelle d'excitation respective à des sous-ensembles (78, ETS1, ..., ETS7, 551) de transducteurs élémentaires (32, 76, 210, 320, 3200) mutuellement adjacents selon la première direction ;

   et **en ce que** :

      - certaines au moins des lois temporelles d'excitation sont agencées de manière que les transducteurs élémentaires (32, 76, 210, 320, 3200) des sous-ensembles (78, ETS1, ..., ETS7, 551) respectifs produisent conjointement des faisceaux d'ondes ultrasonores incidents (UB1, .., UB7, UB'1, UB'i, UB'N) se propageant suivant des directions respectives inclinées par rapport à une direction normale (N2) à la surface extérieure (12, 74) de la pièce tubulaire (3, 72), et certaines au moins des lois temporelles d'excitation sont agencées de manière que les transducteurs élémentaires (32, 76, 210, 320, 3200) des sous-ensembles (78, ETS1, .., ETS7) respectifs produisent des faisceaux d'ondes ultrasonores incidents (UB1, ..., UB7, UB'1, UB'i, UB'N) se propageant suivant des directions respectives présentant une même inclinaison par rapport à la direction normale (N2) à la surface extérieure (12, 74) de la pièce tubulaire (3, 72).

2. Dispositif selon la revendication 1, dans lequel certaines au moins des lois temporelles d'excitation sont agencées de manière que les transducteurs élémentaires (32, 76, 210, 320, 3200) des sous-ensembles (78, ETS1, ..., ETS7) respectifs produisent des faisceaux d'ondes ultrasonores (UB1, ..., UB7) qui se réfractent en partie au moins dans la pièce tubulaire (3, 72) en des faisceaux d'ondes ultrasonores (RB1, ..., RB7) se propageant selon des directions respectives, présentant chacune une inclinaison supérieure à 35° environ par rapport à la direction normale (N2) à la surface extérieure (12, 74) de la pièce tubulaire (3, 72).

3. Dispositif selon l'une des revendications précédentes, dans lequel certaines au moins des lois temporelles d'excitation sont agencées de manière que les transducteurs élémentaires (32, 76, 210, 320, 3200) des sous-ensembles (78, ETS1, ..., ETS7, 551) respectifs produisent des faisceaux d'ondes ultrasonores (UB1, ..., UB7) qui se réfractent en partie au moins dans la pièce tubulaire (3, 72) en des faisceaux d'ondes ultrasonores (RB1, ..., RB7) se propageant selon des directions respectives, présentant chacune une inclinaison inférieure à 60° environ par rapport à la direction normale (N2) à la surface extérieure (12, 74) de la pièce tubulaire (3, 72).

4. Dispositif selon l'une des revendications précédentes, dans lequel certaines au moins des lois temporelles d'excitation sont agencées de manière que les transducteurs élémentaires (32, 76, 210, 320, 3200) des sous-ensembles (78, ETS1, ..., ETS7, 551) respectifs produisent des faisceaux d'ondes ultrasonores (UB1, ..., UB7) qui se réfractent en partie au moins dans la pièce tubulaire (3, 72) en des faisceaux d'ondes ultrasonores (RB1, ..., RB7) se propageant selon des directions respectives, présentant chacune une inclinaison voisine de 40° environ par rapport à la direction normale (N2) à la surface extérieure (12, 74) de la pièce tubulaire (3, 72).

5. Dispositif selon l'une des revendications précédentes, dans lequel le ou les contrôleurs (110) sont agencés pour appliquer plusieurs lois temporelles d'excitation respectives à certains au moins des sous-ensembles (ETS1, ETSi, ETSN) de transducteurs élémentaires, les lois temporelles d'excitation respectives des sous-ensembles (ETS1, ETSi, ETSN) de transducteurs élémentaires étant agencées de manière à produire des faisceaux d'ondes ultrasonores incidents (UB1; UB'1, UBi; UB'i, UBN;UB'N) se propageant selon des directions respectives, inclinées chacune d'un même angle de part et d'autre d'une direction normale (N2) à la surface extérieure de la pièce tubulaire.

6. Dispositif selon l'une des revendications précédentes, dans lequel le ou les contrôleurs (110; 140) sont agencés pour appliquer plusieurs lois temporelles d'excitation respectives à certains au moins des sous-ensembles (ETS1, ETSi, ETSN) de transducteurs élémentaires, l'une au moins des lois temporelles d'excitation respectives de chaque sous-ensemble étant agencée de manière à produire un faisceau d'ondes ultrasonores incident (UB"1, UB"i; UB"N) se propageant selon une direction normale (N2) à la surface extérieure de la pièce tubulaire (3, 72).

7. Dispositif selon l'une des revendications précédentes, dans lequel l'électronique de commande (100) est agencée pour mémoriser des représentations numériques d'une partie au moins de signaux électriques résultant d'une réception d'ondes ultrasonores par certains au moins des transducteurs élémentaires (32, 76, 210, 320, 3200) après chaque application d'une loi temporelle d'excitation à un sous-ensemble respectif (78, ETS1, ..., ETS7, ETSi, ETSN, 551) de transducteurs élémentaires (32, 76, 210, 320, 3200), et dans lequel les représentations numériques sont mémorisées en relation avec un identifiant dudit sous-ensemble respectif (78, ETS1, ..., ETS7, ETSi, ETSN, 551) de transducteurs élémentaires (32, 76, 210, 320, 3200).

8. Dispositif selon la revendication 7, dans lequel l'électronique de commande (100) comprend en outre au moins un module de traitement (140) capable d'opérer sur certaines au moins des représentations numériques mémorisées, et dans lequel ledit module de traitement est agencé pour opérer à chaque fois sur des représentations numériques mémorisées en relation avec un même identifiant de sous-ensemble de transducteurs élémentaires.

9. Dispositif selon la revendication 8, dans lequel le module de traitement (140) est agencé pour opérer à chaque fois seulement sur des représentations numériques de signaux électriques résultant d'une réception d'ondes ultrasonores par les transducteurs élémentaires du sous-ensemble auquel la loi temporelle d'excitation a été appliquée, ou du moins certains d'entre eux.

**10.** Dispositif selon l'une des revendications 8 et 9, dans lequel le module de traitement (140) est agencé pour établir une correspondance entre une partie de l'une au moins des représentations numériques et une données de position angulaire dans la pièce tubulaire (3, 72) et/ou une donnée de position dans l'épaisseur de cette pièce.

**11.** Dispositif selon la revendication 10, dans lequel la donnée de position angulaire comprend un identifiant de transducteur élémentaire particulier et/ou d'un sous-ensemble particulier de transducteurs élémentaires.

**12.** Dispositif selon la revendication 11, dans lequel le transducteur élémentaire particulier et/ou le sous-ensemble particulier (78, ETS1, ..., ETS7, 551) de transducteurs élémentaires sont sélectionnés sur la base d'une valeur maximale d'amplitude parmi des représentations numériques associées à des identifiants différents de sous-ensembles de transducteurs élémentaires.

**13.** Dispositif selon l'une des revendications précédentes, dans lequel deux sous-ensembles (78, ETS1, ETS2, ETS3, ETS4, ETS5, ETS6, ETS7) au moins successivement excités comprennent un ou plusieurs transducteurs élémentaires en commun.

**14.** Dispositif selon l'une des revendications précédentes, comprenant en outre un ou plusieurs organes à couplage ultrasonore solidaires du chariot, et intercalés entre la pluralité de transducteurs élémentaires et la pièce tubulaire.

**15.** Dispositif selon l'une des revendications précédentes, comprenant en outre un encodeur de position (9, 250) attaché audit chariot (7) et relié à l'électronique de commande (100), dans lequel l'électronique de commande (100) est agencée pour mémoriser une représentation numérique d'une partie au moins de signaux électriques résultant d'une réception d'ondes ultrasonores par certains au moins des transducteurs élémentaires après chaque application d'une loi temporelle d'excitation à un sous-ensemble (78, ETS1, ..., ETS7, 551) de transducteurs élémentaires respectif, et dans lequel les représentations numériques sont mémorisées en relation avec une donnée de position par rapport à la pièce tubulaire (3, 72) issue de l'encodeur de position (9, 250).

**16.** Dispositif selon l'une des revendications précédentes, dans lequel le chariot (7) comprend une surface active (19) en correspondance de forme avec la pièce tubulaire (3, 72), et dans lequel les transducteurs élémentaires sont répartis sur ladite surface active.

**17.** Dispositif selon l'une des revendications précédentes, dans lequel les transducteurs élémentaires (3200) sont en outre répartis selon au moins une seconde direction, et dans lequel le guide (11) est apte à coopérer avec la surface extérieure de la pièce tubulaire à contrôler pour positionner le chariot (7) de manière que ladite seconde direction corresponde sensiblement à une direction longitudinale de la pièce tubulaire.

**18.** Dispositif selon la revendication 17, dans lequel certains au moins des sous-ensembles (551) de transducteurs élémentaires (3200) mutuellement adjacents selon la première direction comprennent en outre des transducteurs élémentaires (3200) mutuellement adjacents selon la seconde direction, et en ce que certaines au moins des lois temporelles d'excitation sont agencées de manière que les transducteurs élémentaires (3200) du sous-ensemble (551) respectif produisent conjointement un faisceau d'ondes ultrasonores incident se propageant selon une direction inclinée en outre par rapport à la direction longitudinale de la pièce tubulaire (3, 72) et/ou une direction transversale de cette pièce.

**19.** Dispositif selon l'une des revendications précédentes, dans lequel le contrôleur (110) est agencé pour appliquer une loi temporelle d'excitation respective à un sous-ensemble au moins de transducteurs élémentaires proches d'une extrémité de la répartition des transducteurs élémentaires, ladite loi temporelle d'excitation étant agencée de manière que les transducteurs élémentaires de l'un au moins de sous-ensembles proches d'une extrémité du chariot produisent conjointement un faisceau d'ondes ultrasonores incident se propageant selon une direction plus inclinée par rapport à une direction normale à la surface extérieure de la pièce tubulaire que le reste des sous-ensembles.

**Patentansprüche**

**1.** Vorrichtung zur Kontrolle rohrförmiger Bauteile (3, 72) von der Art, die enthält:

- mindestens einen Schlitten (7) ausgestattet mit:

- einer Vielzahl von Elementarwandlern (32, 76, 210, 320, 3200) vom elektroakustischen Typ, die gemäß mindestens einer ersten Richtung verteilt sind,
- einer Führung (11), die geeignet ist, mit einer Außenfläche (12, 74) eines zu kontrollierenden rohrförmigen Bauteils (3, 72) zusammenzuwirken, um den Schlitten (7) so zu positionieren, dass die erste Richtung im Wesentlichen einer Querrichtung des rohrförmigen Bauteils (3, 72) entspricht;

- eine mit den elektroakustischen Wandlern (32, 76, 210, 320, 3200) verbundene Steuerelektronik (100);

**dadurch gekennzeichnet, dass** die Steuerelektronik (100) enthält:

- einen Speicher (140), der ein oder mehrere zeitliche Erregungsgesetze speichert;
- eine oder mehrere Steuerungen (110; 140), die eingerichtet sind, um nacheinander mindestens ein zeitliches Erregungsgesetz an Teileinheiten (78, ETS1, ... , ETS7, 551) von Elementarwandlern (32, 76, 210, 320, 3200) anzuwenden, die einander gemäß der ersten Richtung benachbart sind;

und dass:

- mindestens bestimmte der zeitlichen Erregungsgesetze so eingerichtet sind, dass die Elementarwandler (32, 76, 210, 320, 3200) der Teileinheiten (78, ETS1, ... , ETS7, 551) gemeinsam einfallende Ultraschallwellenbündel (UB1, ... , UB7, UB'1, UB'i, UB'N) erzeugen, die sich gemäß Richtungen ausbreiten, die bezüglich einer normalen Richtung (N2) zur Außenfläche (12, 74) des rohrförmigen Bauteils (3, 72) geneigt sind, und mindestens bestimmte der zeitlichen Erregungsgesetze so eingerichtet sind, dass die Elementarwandler (32, 76, 210, 320, 3200) der Teileinheiten (78, ETS1, ... , ETS7) einfallende Ultraschallwellenbündel (UB1, ... , UB7, UB'1, UB'i, UB'N) erzeugen, die sich gemäß Richtungen ausbreiten, die eine gleiche Neigung bezüglich der normalen Richtung (N2) zur Außenfläche (12, 74) des rohrförmigen Bauteils (3, 72) aufweisen.

2. Vorrichtung nach Anspruch 1, wobei mindestens bestimmte der zeitlichen Erregungsgesetze so eingerichtet sind, dass die Elementarwandler (32, 76, 210, 320, 3200) der Teileinheiten (78, ETS1, ... , ETS7) Ultraschallwellenbündel (UB1, ... , UB7) erzeugen, die sich zumindest zum Teil im rohrförmigen Bauteil (3, 72) in Ultraschallwellenbündel (RB1, ... , RB7) brechen, die sich gemäß Richtungen ausbreiten, die je eine Neigung von mehr als etwa 35° bezüglich der normalen Richtung (N2) zur Außenfläche (12, 74) des rohrförmigen Bauteils (3, 72) aufweisen.

3. Vorrichtung nach einem der vorhergehenden Ansprüche, wobei mindestens bestimmte der zeitlichen Erregungsgesetze so eingerichtet sind, dass die Elementarwandler (32, 76, 210, 320, 3200) der Teileinheiten (78, ETS1, ... , ETS7, 551) Ultraschallwellenbündel (UB1, ... , UB7) erzeugen, die sich zumindest zum Teil im rohrförmigen Bauteil (3, 72) in Ultraschallwellenbündel (RB1, ... , RB7) brechen, die sich gemäß Richtungen ausbreiten, die je eine Neigung von weniger als etwa 60° bezüglich der normalen Richtung (N2) zur Außenfläche (12, 74) des rohrförmigen Bauteils (3, 72) aufweisen.

4. Vorrichtung nach einem der vorhergehenden Ansprüche, wobei mindestens bestimmte der zeitlichen Erregungsgesetze so eingerichtet sind, dass die Elementarwandler (32, 76, 210, 320, 3200) der Teileinheiten (78, ETS1, ... , ETS7, 551) Ultraschallwellenbündel (UB1, ... , UB7) erzeugen, die sich zumindest zum Teil im rohrförmigen Bauteil (3, 72) in Ultraschallwellenbündel (RB1, ... , RB7) brechen, die sich gemäß Richtungen ausbreiten, die je eine Neigung nahe etwa 40° bezüglich der normalen Richtung (N2) zur Außenfläche (12, 74) des rohrförmigen Bauteils (3, 72) aufweisen.

5. Vorrichtung nach einem der vorhergehenden Ansprüche, wobei die Steuerung oder die Steuerungen (110) eingerichtet sind, um mehrere zeitliche Erregungsgesetze an mindestens bestimmte der Teileinheiten (ETS1, ETSi, ETSN) von Elementarwandlern anzuwenden, wobei die zeitlichen Erregungsgesetze der Teileinheiten (ETS1, ETSi, ETSN) von Elementarwandlern so eingerichtet sind, dass sie einfallende Ultraschallwellenbündel (UB1; UB'1, UBi; UB'i, UBN; UB'N) erzeugen, die sich gemäß Richtungen ausbreiten, die je um einen gleichen Winkel zu beiden Seiten einer normalen Richtung (N2) zur Außenfläche des rohrförmigen Bauteils geneigt sind.

6. Vorrichtung nach einem der vorhergehenden Ansprüche, wobei die Steuerung oder die Steuerungen (110; 140) eingerichtet sind, um mehrere zeitliche Erregungsgesetze an mindestens bestimmte der Teileinheiten (ETS1, ETSi, ETSN) von Elementarwandlern anzuwenden, wobei mindestens eins der zeitlichen Erregungsgesetze jeder Teileinheit eingerichtet ist, um ein einfallendes Ultraschallwellenbündel (UB"1, UB"i; UB"N) zu erzeugen, das sich gemäß einer normalen Richtung (N2) zur Außenfläche des rohrförmigen Bauteils (3, 72) ausbreitet.

7. Vorrichtung nach einem der vorhergehenden Ansprüche, wobei die Steuerelektronik (100) eingerichtet ist, um digitale Darstellungen mindestens eines Teils von elektrischen Signalen zu speichern, die aus einem Empfang von Ultraschallwellen durch mindestens bestimmte der Elementarwandler (32, 76, 210, 320, 3200) nach jeder Anwendung eines zeitlichen Erregungsgesetzes an eine Teileinheit (78, ETS1, ... , ETS7, ETSi, ETSN, 551) von Elementarwandlern (32, 76, 210, 320, 3200) resultieren, und wobei die digitalen Darstellungen in Verbindung mit einer Kennung der Teileinheit (78, ETS1, ... , ETS7, ETSi, ETSN, 551) von Elementarwandlern (32, 76, 210, 320, 3200) gespeichert werden.

8. Vorrichtung nach Anspruch 7, wobei die Steuerelektronik (100) außerdem mindestens ein Verarbeitungsmodul (140) enthält, das fähig ist, auf mindestens bestimmte der gespeicherten digitalen Darstellungen einzuwirken, und wobei das Verarbeitungsmodul eingerichtet ist, jedes Mal auf in Verbindung mit einer gleichen Kennung einer Teileinheit von Elementarwandlern gespeicherte digitale Darstellungen einzuwirken.

9. Vorrichtung nach Anspruch 8, wobei das Verarbeitungsmodul (140) eingerichtet ist, jedes Mal nur auf digitale Darstellungen von elektrischen Signalen einzuwirken, die aus einem Empfang von Ultraschallwellen durch die Elementarwandler der Teileinheit, an die das zeitliche Erregungsgesetz angewendet wurde, oder zumindest bestimmte von ihnen, resultieren.

10. Vorrichtung nach einem der Ansprüche 8 und 9, wobei das Verarbeitungsmodul (140) eingerichtet ist, um eine Entsprechung zwischen einem Teil der mindestens einen der digitalen Darstellungen und einem Datenwert der Winkelposition im rohrförmigen Bauteil (3, 72) und/oder einem Datenwert der Position in der Dicke dieses Bauteils zu erstellen.

11. Vorrichtung nach Anspruch 10, wobei der Winkelpositionsdatenwert eine Kennung eines bestimmten Elementarwandlers und/oder einer bestimmten Teileinheit von Elementarwandlern enthält.

12. Vorrichtung nach Anspruch 11, wobei der bestimmte Elementarwandler und/oder die bestimmte Teileinheit (78, ETS1, ... , ETS7, 551) von Elementarwandlern auf der Basis eines maximalen Amplitudenwerts unter digitalen Darstellungen, die unterschiedlichen Kennungen von Teileinheiten von Elementarwandlern zugeordnet sind, ausgewählt werden.

13. Vorrichtung nach einem der vorhergehenden Ansprüche, wobei mindestens zwei nacheinander angeregte Teileinheiten (78, ETS1, ETS2, ETS3, ETS4, ETS5, ETS6, ETS7) einen oder mehrere Elementarwandler gemeinsam haben.

14. Vorrichtung nach einem der vorhergehenden Ansprüche, die außerdem ein oder mehrere Elemente mit Ultraschallkopplung enthält, die fest mit dem Schlitten verbunden und zwischen der Vielzahl von Elementarwandlern und dem rohrförmigen Bauteil eingefügt sind.

15. Vorrichtung nach einem der vorhergehenden Ansprüche, die außerdem einen Positionscodierer (9, 250) enthält, der am Schlitten (7) befestigt und mit der Steuerelektronik (100) verbunden ist, wobei die Steuerelektronik (100) eingerichtet ist, um eine digitale Darstellung mindestens eines Teils von elektrischen Signalen zu speichern, die aus einem Empfang von Ultraschallwellen durch mindestens bestimmte der Elementarwandler nach jeder Anwendung eines zeitlichen Erregungsgesetzes an eine Teileinheit (78, ETS1, ... , ETS7, 551) von Elementarwandlern resultieren, und wobei die digitalen Darstellungen in Verbindung mit einem Positionsdatenwert bezüglich des rohrförmigen Bauteils (3, 72) gespeichert werden, der vom Positionscodierer (9, 250) stammt.

16. Vorrichtung nach einem der vorhergehenden Ansprüche, wobei der Schlitten (7) eine aktive Fläche (19) in Formübereinstimmung mit dem rohrförmigen Bauteil (3, 72) enthält, und wobei die Elementarwandler auf der aktiven Fläche verteilt sind.

17. Vorrichtung nach einem der vorhergehenden Ansprüche, wobei die Elementarwandler (3200) außerdem gemäß mindestens einer zweiten Richtung verteilt sind, und wobei die Führung (11) in der Lage ist, mit der Außenfläche des zu kontrollierenden rohrförmigen Bauteils zusammenzuwirken, um den Schlitten (7) so zu positionieren, dass die zweite Richtung im Wesentlichen einer Längsrichtung des rohrförmigen Bauteils entspricht.

18. Vorrichtung nach Anspruch 17, wobei mindestens bestimmte der einander gemäß der ersten Richtung benachbarten Teileinheiten (551) von Elementarwandlern (3200) außerdem Elementarwandler (3200) enthalten, die einander gemäß der zweiten Richtung benachbart sind, und dass mindestens bestimmte der zeitlichen Erregungsgesetze so eingerichtet sind, dass die Elementarwandler (3200) der Teileinheit (551) gemeinsam ein einfallendes Ultraschallwellenbündel erzeugen, das sich gemäß einer Richtung ausbreitet, die außerdem bezüglich der Längsrichtung des rohrförmigen Bauteils (3, 72) und/oder einer Querrichtung dieses Bauteils geneigt ist.

19. Vorrichtung nach einem der vorhergehenden Ansprüche, wobei die Steuerung (110) eingerichtet ist, ein zeitliches Erregungsgesetz an mindestens eine Teileinheit von Elementarwandlern nahe einem Ende der Verteilung der Elementarwandler anzuwenden, wobei das zeitliche Erregungsgesetz so eingerichtet ist, dass die Elementarwandler mindestens einer der Teileinheiten nahe einem Ende des Schlittens gemeinsam ein einfallendes Ultraschallwellenbündel erzeugen, das sich gemäß einer Richtung ausbreitet, die bezüglich einer normalen Richtung zur Außenfläche des rohrförmigen Bauteils stärker geneigt ist als der Rest der Teileinheiten.

**Claims**

1. Device for the inspection of tubular pieces (3, 72), of the type comprising:

- at least one cart (7) outfitted with:

- a plurality of elemental transducers (32, 76, 210, 320, 3200) of electroacoustic type, distributed along at least a first direction,
- a guide (11) able to cooperate with an exterior surface (12, 74) of a tubular piece (3, 72) being inspected so as to position the cart (7) in a way such that said first direction essentially corresponds to a direction transverse to the tubular piece (3, 72);

- a control electronics (100), connected to the electroacoustic transducers (32, 76, 210, 320, 3200);

**characterized in that** the control electronics (100) comprises:

- memory (140) storing one or more timed excitation laws;
- one or more controllers (110; 140) designed to apply in succession at least one respective timed excitation law to subsets (78, ETS1, ..., ETS7, 551) of mutually adjacent elemental transducers (32, 76, 210, 320, 3200) along the first direction;

and **in that**:

- at least certain of the timed excitation laws are designed so that the elemental transducers (32, 76, 210, 320, 3200) of the respective subsets (78, ETS1, ..., ETS7, 551) jointly produce incident beams of ultrasonic waves (UB1, ..., UB7, UB'1, UB'i, UB'N) propagating along respective directions inclined relative to a direction normal (N2) to the exterior surface (12, 74) of the tubular piece (3, 72),

at least certain of the timed excitation laws are designed so that the elemental transducers (32, 76, 210, 320, 3200) of the respective subsets (78, ETS1, ..., ETS7) produce incident beams of ultrasonic waves (UB1, ..., UB7, UB'1, UB'i, UB'N) propagating along respective directions having the same inclination with respect to the direction normal (N2) to the exterior surface (12, 74) of the tubular piece (3, 72).

2. Device according to claim 1, in which at least certain of the timed excitation laws are designed so that the elemental transducers (32, 76, 210, 320, 3200) of the respective subsets (78, ETS1, ..., ETS7) produce incident beams of ultrasonic waves (UB1, ..., UB7) which are refracted at least partly in the tubular piece (3, 72) into beams of ultrasonic waves (RB1, ..., RB7) propagating along respective directions, each one having an inclination greater than around 35° with respect to the direction normal (N2) to the exterior surface (12, 74) of the tubular piece (3, 72).

3. Device according to one of the preceding claims, in which at least certain of the timed excitation laws are designed so that the elemental transducers (32, 76, 210, 320, 3200) of the respective subsets (78, ETS1, ..., ETS7, 551) produce incident beams of ultrasonic waves (UB1, ..., UB7) which are refracted at least partly in the tubular piece (3, 72) into beams of ultrasonic waves (RB1, ..., RB7) propagating along respective directions, each one having an inclination less than around 60° with respect to the direction normal (N2) to the exterior surface (12, 74) of the tubular piece (3, 72).

4. Device according to one of the preceding claims, in which at least certain of the timed excitation laws are designed so that the elemental transducers (32, 76, 210, 320, 3200) of the respective subsets (78, ETS1, ..., ETS7, 551) produce incident beams of ultrasonic waves (UB1, ..., UB7) which are refracted at least partly in the tubular piece (3, 72) into beams of ultrasonic waves (RB1, ..., RB7) propagating along respective directions, each one having an inclination near around 40° with respect to the direction normal (N2) to the exterior surface (12, 74) of the tubular piece (3, 72).

5. Device according to one of the preceding claims, in which the controller(s) (110) are designed to apply several respective timed excitation laws to at least certain of the subsets (ETS1, ETSi, ETSN) of elemental transducers, the respective timed excitation laws of the subsets (ETS1, ETSi, ETSN) of elemental transducers being designed so as to produce incident beams of ultrasonic waves (UB1; UB'1, UBi; UB'i, UBN;UB'N) propagating along respective directions, each one inclined by the same angle on either side of a direction normal (N2) to the exterior surface of the tubular piece.

6. Device according to one of the preceding claims, in which the controller(s) (110; 140) are designed to apply several respective timed excitation laws to at least certain of the subsets (ETS1, ETSi, ETSN) of elemental transducers, at least one of the respective timed excitation laws off each subset being designed so as to produce an incident beam of ultrasonic waves (UB"1, UB"i; UB"N) propagating along a direction normal (N2) to the exterior surface of the tubular piece (3, 72).

7. Device according to one of the preceding claims, in which the control electronics (100) is designed to save digital representations of at least a portion of electric signals resulting from a reception of ultrasonic waves by at least some of the elemental transducers (32, 76, 210, 320, 3200) after each application of a timed excitation law to a respective subset (78, ETS1, ..., ETS7, ETSi, ETSN, 551) of elemental transducers (32, 76, 210, 320, 3200), and in which the digital representations are saved in connection with an identifier of said respective subset (78, ETS1, ..., ETS7, ETSi, ETSN, 551) of elemental transducers (32, 76, 210, 320, 3200).

8. Device according to claim 7, in which the control electronics (100) furthermore comprises at least one processing module (140) able to operate on at least some of the digital representations, and in which said processing module is designed to operate each time on the digital representations saved in connection with the same identifier of the subset of elemental transducers.

9. Device according to claim 8, in which the processing module (140) is designed to operate each time only on the digital representations of electric signals resulting from a reception of ultrasonic waves by the elemental transducers of the subset to which the timed excitation law was applied, or at least some of them.

10. Device according to one of claims 8 and 9, in which the processing module (140) is designed to establish a correspondence between a part of at least one of the digital representations and an angular position datum in the tubular piece (3, 72) and/or a position datum in the thickness of this piece.

11. Device according to claim 10, in which the angular position datum comprises an identifier of a particular elemental transducer and/or of a particular subset of elemental transducers.

12. Device according to claim 11, in which the particular elemental transducer and/or the particular subset (78, ETS1, ..., ETS7, 551) of elemental transducers are selected on the basis of a maximum amplitude value among the digital representations associated with different identifiers of subsets of elemental transducers.

13. Device according to one of the preceding claims, in which at least two subsets (78, ETS1, ETS2, ETS3, ETS4, ETS5, ETS6, ETS7) excited successively have one or more elemental transducers in common.

14. Device according to one of the preceding claims, comprising moreover one or more ultrasound coupling elements integrated with the cart, and intercalated between the plurality of elemental transducers and the tubular piece.

15. Device according to one of the preceding claims, comprising moreover a position encoder (9, 250) attached to said cart (7) and connected to the control electronics (100), in which the control electronics (100) is designed to save a digital representation of at least a portion of electric signals resulting from a reception of ultrasonic waves by at least some of the elemental transducers after each application of a timed excitation law to a respective subset (78, ETS1, ..., ETS7, 551) of elemental transducers, and in which the digital representations are saved in connection with a position datum with regard to the tubular piece (3, 72) resulting from the position encoder (9, 250).

16. Device according to one of the preceding claims, in which the cart (7) comprises an active surface (19) corresponding in shape to the tubular piece (3, 72), and in which the elemental transducers are distributed over said active surface.

17. Device according to one of the preceding claims, in which the elemental transducers (3200) are moreover distributed along at least one second direction, and in which the guide (11) is able to cooperate with the outer surface of the tubular piece being inspected so as to position the cart (7) in a way such that said second direction corresponds essentially to a longitudinal direction of the tubular piece.

18. Device according to claim 17, in which at least some of the subsets (551) of elemental transducers (3200) which are mutually adjacent along the first direction furthermore contain elemental transducers (3200) which are mutually adjacent along the second direction, and in that at least some of the timed excitation laws are designed so that the elemental transducers (3200) of the respective subset (551) jointly produce an incident beam of ultrasonic waves propagating along a direction inclined furthermore in relation to the longitudinal direction of the tubular piece (3, 72) and/or a transverse direction of this piece.

19. Device according to one of the preceding claims, in which the controller (110) is designed to apply a respective timed excitation law to a subset at least of elemental transducers close to one end of the distribution of elemental transducers, said timed excitation law being designed so that the elemental transducers of at least one of the subsets near one end of the cart jointly produce an incident beam of ultrasonic waves propagating along a direction more inclined with respect to a direction normal to the outer surface of the tubular piece than the rest of the subsets.

Fig.1

Fig.2

Fig.3

**Fig.4**

17

7

21

19   12

23

13

11

13

15

15

3

**Fig.5**

32

32

34

30

110

100

210

COM

140

400

$D_1$   $t_1$   CAN   A-scan

$D_2$   $t_2$   CAN   130

$D_3$   $t_3$   CAN   500

$D_4$   $t_4$   CAN   B-scan

130   CAN   600

MEM
+
PROC

$D_{N-1}$   $t_{N-1}$   CAN   C-scan

$D_N$   $t_N$   CAN

**Fig.6**

200   250

**Fig.7**

**Fig.8**

**Fig.9**

- - - Leau-Lacier
——— Leau-Tacier

**Fig.10**

——— Leau-Lacier

**Fig.12**

# Fig.11A

# Fig.11B

# Fig.13

# Fig.14

**Fig.15**

**Fig.16**

**Fig.17**

**Fig.18**

**Fig.19**

Fig.20

Fig.21

**Fig.22**

300

320

**Fig.23**

ETS1

ETS2

ETS3    ETS4    ETS5

ETS7

ETS6

740

UB3

UB2

UB1

UB5

UB6

UB7

UB4

72

3000

SS1

**Fig.24**

3200

TD

LD

**EP 2 976 635 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- US 7975549 B2
- US 7984650 B2
- US 5526691 A
- US 5549004 A
- US 7516664 B
- WO 200350527 A